# EUROPEAN PATENT SPECIFICATION

(11) **EP 3 154 209 B1**
(45) Date of publication and mention of the grant of the patent: **28.11.2018**
(21) Application number: 14893826.9
(22) Date of filing: 23.10.2014
(51) Int. Cl.: H04B 7/26, H04W 72/12

(54) **METHOD AND DEVICE FOR SENDING/RECEIVING DATA TRANSMISSION BLOCK**
VERFAHREN UND VORRICHTUNG FÜR SENDUNG/EMPFANG EINES DATENÜBERTRAGUNGSBLOCKS
PROCÉDÉ ET DISPOSITIF D'ENVOI/RÉCEPTION D'UN BLOC DE TRANSMISSION DE DONNÉES

(30) Priority: 05.06.2014 CN 201410248209
(43) Date of publication of application: 12.04.2017
(73) Proprietor: ZTE Corporation, Shenzhen, Guangdong 518057 (CN)
(72) Inventor: XIA, Shuqiang, Shenzhen Guangdong 518057 (CN); HAN, Xiaogang, Shenzhen Guangdong 518057 (CN); BI, Feng, Shenzhen Guangdong 518057 (CN); GOU, Wei, Shenzhen Guangdong 518057 (CN); PENG, Focai, Shenzhen Guangdong 518057 (CN)
(74) Representative: Savi, Massimiliano
(86) International application number: PCT/CN2014/089354
(87) International publication number: WO 2015/184725

(56) References cited:
- CN-A- 1 627 844
- CN-A- 102 130 711
- CN-A- 102 761 954
- US-A1- 2012 307 869
- INTEL CORPORATION: "Open issues of CA for different TDD UL-DL configurations", 3GPP DRAFT; R1-120208, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562771, [retrieved on 2012-01-31]

## Description

### Technical Field

The present invention relates to the field of communications, and in particular, to methods and apparatuses for transmitting and receiving a data transport block.

### Background

The carrier aggregation technology is an important characteristic of the Long-Term Evolution Advance (LTE-Advance for short) standard, and is also the most critical technology to achieve operation of the LTE-Advanced system at a 100M bandwidth.

In the LTE-Advanced, when the UE is not configured with a carrier aggregation mode, there can only be one serving cell. When the UE is configured with a carrier aggregation mode, there may be a plurality of serving cells, so that a higher data rate can be provided to support more user businesses and new services. However, in the existing carrier aggregation technology, component carriers corresponding to various serving cells have the same attributes, for example, all the component carriers are authorized carriers, each carrier may be used as a primary cell of the UE etc. But when attributes of component carriers corresponding to various serving cells are not the same, for example, one carrier is an authorized carrier and another carrier is a non-authorized carrier, the authorized carrier resources are stable and reliable, but generally have a limited bandwidth and a high cost, while the non-authorized carrier resources have features such as a low cost, enrich bandwidths, but unstable availability. A similar problem also arises in a case where one carrier is an authorized carrier and another carrier is a shared authorized access carrier or a television blank band carrier etc.

Therefore, in the related art, when the carrier aggregation is performed using different types of carrier attributes, there is a problem that the resource utilization rate is not high and the transmission efficiency of the data transport block is low.

The document "INTEL CORPORATION: Open issue of CA for different TDD UL-DL configurations, 3GPP-DRAFT, R1-120208" discloses the open issues of CA for different TDD UL-DL configurations and proposals: 1. UL/DL prioritization in conflicting subframes always follows the transmission direction of PCell in case that configuration 0; 2. Cross-carrier scheduling with the DL Grant and PDSCH in the same TTI should be supported both for half-duplex and full-duplex UEs in Release 11.

### Summary of the Invention

The present invention provides methods and apparatuses for transmitting and receiving a data transport block, to at least solve the problem in the related art that when the carrier aggregation is performed using different types of carrier attributes, the resource utilization rate is not high and the transmission efficiency of the data blocks is low.

According to an aspect of the present invention, there is provided a method for transmitting a data transport block, including : determining cells of a first type supporting transmission of scheduling allocation signaling and cells of a second type supporting only data transmission; transmitting scheduling allocation signaling of a first type and one or more scheduling allocation signaling of a second type on the cells of the first type, herein the scheduling allocation signaling of the first type is used for indicating that the same data transport block is transmitted over a plurality of transmission time intervals included within a predetermined time, and the scheduling allocation signaling of the second type transmitted over a predetermined transmission time interval within the predetermined time is used for indicating that the data transport block is transmitted over the predetermined transmission time interval; and transmitting the data transport block on the cells of the second type according to the scheduling allocation signaling of the first type, and transmitting the data transport block on the cells of the first type and/or the cells of the second type according to the scheduling allocation signaling of the second type.

Alternatively, before transmitting the scheduling allocation signaling of the first type and one or more scheduling allocation signaling of the second type on the cells of the first type, the method further includes: adjusting a number of the scheduling allocation signaling of the second type transmitted on the cells of the first type according to a resource competition condition of the cells of the second type.

Alternatively, the scheduling allocation signaling of the first type is transmitted on the cells of the first type by at least one of: transmitting the first scheduling allocation signaling over a first transmission time interval of the plurality of transmission time intervals included within the predetermined time; and transmitting the first scheduling allocation signaling over a predetermined number K of transmission time intervals before the predetermined time.

Alternatively, before transmitting the data transport block on the cells of the second type according to the scheduling allocation signaling of the first type, and transmitting the data transport block on the cells of the first type and/or the cells of the second type according to the scheduling allocation signaling of the second type, the method further includes: allocating, on the cells of the first type, a feedback resource to a target receiving end which receives the data transport block, herein the feedback resource is used for feeding back a detection result for the data transport block.

Alternatively, transmitting the data transport block on the cells of the second type according to the scheduling allocation signaling of the first type, and transmitting the data transport block on the cells of the first type and/or the cells of the second type according to the scheduling allocation signaling of the second type includes: judging whether the same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type; in a case that a judgment result is yes, transmitting the data transport block over the predetermined transmission time interval according to the scheduling allocation signaling of the second type and transmitting the data transport block over other transmission time intervals in the set composed of the plurality of transmission time intervals other than the predetermined time interval according to the scheduling allocation signaling of the first type; and/or in a case that the judgment result is no, transmitting the data transport block over the predetermined transmission time interval according to the scheduling allocation signaling of the second type and transmitting the data transport block over the plurality of transmission time intervals according to the scheduling allocation signaling of the first type.

Alternatively, transmitting the data transport block on the cells of the first type and/or the cells of the second type according to the scheduling allocation signaling of the second type includes: judging whether the scheduling allocation signaling of the second type carries cell index information for indicating a cell on which the data transport block is transmitted; in a case that a judgment result is yes and the cell index information indicates the cells of the first type, transmitting the data transport block on the cells of the first type; and/or in the case that the judgment result is yes and the cell index information indicates the cells of the second type, or in the case that the judgment result is no, transmitting the data transport block on the cells of the second type.

Alternatively, after transmitting the data transport block on the cells of the second type according to the scheduling allocation signaling of the first type, and transmitting the data transport block on the cells of the first type and/or the cells of the second type according to the scheduling allocation signaling of the second type, the method further includes: receiving a detection result for detection of the data transport block transmitted by a target receiving end which receives the data transport block.

Alternatively, a time difference between any two adjacent transmission time intervals in the plurality of transmission time intervals included within the predetermined time is not less than a Round Trip Time (RTT) between a transmitting end and a target receiving end of the data transport block.

According to another aspect of the present invention, there is provided a method for receiving a data transport block, including : determining a predetermined time in which a data transport block is received; receiving scheduling allocation signaling of a first type and one or more scheduling allocation signaling of a second type on cells of a first type supporting transmission of scheduling allocation signaling, herein the scheduling allocation signaling of the first type is used for indicating that the same data transport block is received over a plurality of transmission time intervals included within the predetermined time, and the scheduling allocation signaling of the second type received over a predetermined transmission time interval within the predetermined time is used for indicating that the data transport block is received over the predetermined transmission time interval; and receiving the data transport block on cells of a second type according to the scheduling allocation signaling of the first type, and receiving the data transport block on the cells of the first type and/or the cells of the second type according to the scheduling allocation signaling of the second type.

Alternatively, before receiving the data transport block on the cells of the second type according to the scheduling allocation signaling of the first type, and receiving the data transport block on the cells of the first type and/or the cells of the second type according to the scheduling allocation signaling of the second type, the method further includes: receiving, on the cells of the first type, a feedback resource which is allocated by a transmitting end which transmits the data transport block, herein the feedback resource is used for feeding back a detection result obtained by detecting the data transport block.

Alternatively, after receiving the data transport block on the cells of the second type according to the scheduling allocation signaling of the first type, and receiving the data transport block on the cells of the first type and/or the cells of the second type according to the scheduling allocation signaling of the second type, the method further includes: transmitting, to the transmitting end which transmits the data transport block, the detection result obtained by detecting the data transport block according to the scheduling allocation signaling of the first type and/or the scheduling allocation signaling of the second type using the feedback resource.

Alternatively, transmitting, to the transmitting end which transmits the data transport block, the detection result obtained by detecting the data transport block according to the scheduling allocation signaling of the first type and/or the scheduling allocation signaling of the second type using the feedback resource includes at least one of: in a case that only the scheduling allocation signaling of the first type is successfully detected over a transmission time interval, and detection for the data transport block over the transmission time interval is correct, feeding back detection correctness information to the transmitting end which transmits the data transport block according to the feedback resource; in a case that only the scheduling allocation signaling of the first type is successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource; in a case that the scheduling allocation signaling of the first type and the scheduling allocation signaling of the second type are successfully detected over a transmission time interval, and detection for the data transport block over the transmission time interval is correct, feeding back detection correctness information to the transmitting end which transmits the data transport block according to the feedback resource; in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource; in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feeding back detection correctness information to the transmitting end which transmits the data transport block according to the feedback resource; in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feeding back detection error information to the transmitting end which transmits the data transport block according to the feedback resource; in a case that only the scheduling allocation signaling of the second type is successfully detected over a transmission time interval, and detection for the data transport block over the transmission time interval is correct, feeding back detection correctness information to the transmitting end which transmits the data transport block according to the feedback resource; and in a case that only the scheduling allocation signaling of the second type is successfully detected over a transmission time interval, and detection for the data transport block over the transmission time interval is erroneous, transmitting detection error information to the transmitting end for the data transport block according to the feedback resource.

According to another aspect of the present invention, there is provided an apparatus for transmitting a data transport block, including : a first determination module arranged to determine cells of a first type supporting transmission of scheduling allocation signaling and cells of a second type supporting only data transmission; a first transmission module arranged to transmit scheduling allocation signaling of a first type and one or more scheduling allocation signaling of a second type on the cells of the first type, herein the scheduling allocation signaling of the first type is used for indicating that the same data transport block is transmitted over a plurality of transmission time intervals included within a predetermined time, and the scheduling allocation signaling of the second type transmitted over a predetermined transmission time interval within the predetermined time is used for indicating that the data transport block is transmitted over the predetermined transmission time interval; and a second transmission module arranged to transmit the data transport block on the cells of the second type according to the scheduling allocation signaling of the first type, and transmit the data transport block on the cells of the first type and/or the cells of the second type according to the scheduling allocation signaling of the second type.

Alternatively, the apparatus further includes: an adjustment module arranged to adjust a number of the scheduling allocation signaling of the second type transmitted on the cells of the first type according to a resource competition condition of the cells of the second type.

Alternatively, the first transmission module includes at least one of: a first transmission unit arranged to transmit the first scheduling allocation signaling over a first transmission time interval of the plurality of transmission time intervals included within the predetermined time; and a second transmission unit arranged to transmit the first scheduling allocation signaling over a predetermined number K of transmission time intervals before the predetermined time.

Alternatively, the apparatus further includes: an allocation module arranged to allocate, on the cells of the first type, a feedback resource to a target receiving end which receives the data transport block, herein the feedback resource is used for feeding back a detection result for the data transport block.

Alternatively, the second transmission module includes: a first judgment unit arranged to judge whether the same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type; a third transmission unit, arranged to in a case that a judgment result of the first judgment unit is yes, transmit the data transport block over the predetermined transmission time interval according to the scheduling allocation signaling of the second type and transmit the data transport block over other transmission time intervals in the set composed of the plurality of transmission time intervals other than the predetermined transmission time according to the scheduling allocation signaling of the first type; and/or a fourth transmission unit arranged to in a case that the judgment result of the first judgment unit is no, transmit the data transport block over the predetermined transmission time interval according to the scheduling allocation signaling of the second type and transmit the data transport block over the plurality of transmission time intervals according to the scheduling allocation signaling of the first type.

Alternatively, the second transmission module includes: a second judgment unit arranged to judge whether the scheduling allocation signaling of the second type carries cell index information for indicating a cell on which the data transport block is transmitted; a fifth transmission unit arranged to in a case that a judgment result of the second judgment unit is yes and the cell index information indicates the cells of the first type, transmit the data transport block on the cells of the first type; and/or, a sixth transmission unit arranged to in the case that the judgment result of the second judgment unit is yes and the cell index information indicates the cells of the second type, or in the case that the judgment result of the second judgment unit is no, transmit the data transport block on the cells of the second type.

Alternatively, the apparatus further includes: a first reception module arranged to receive a detection result for detection of the data transport block transmitted by a target receiving end which receives the data transport block.

According to another aspect of the present invention, there is provided an apparatus for receiving a data transport block, including : a second determination module arranged to determine a predetermined time in which a data transport block is received; a second reception module arranged to receive scheduling allocation signaling of a first type and one or more scheduling allocation signaling of a second type on cells of a first type supporting transmission of scheduling allocation signaling, herein the scheduling allocation signaling of the first type is set for indicating that the same data transport block is received over a plurality of transmission time intervals included within the predetermined time, and the scheduling allocation signaling of the second type received over a predetermined transmission time interval within the predetermined time is used for indicating that the data transport block is received over the predetermined transmission time interval; and a third reception module arranged to receive the data transport block on cells of a second type according to the scheduling allocation signaling of the first type, and receive the data transport block on the cells of the first type and/or the cells of the second type according to the scheduling allocation signaling of the second type.

Alternatively, the apparatus further includes: a fourth reception module arranged to receive, on the cells of the first type, a feedback resource which is allocated by a transmitting end which transmits the data transport block, herein the feedback resource is used for feeding back a detection result obtained by detecting the data transport block.

Alternatively, the apparatus further includes: a third transmission module arranged to transmit, to the transmitting end which transmits the data transport block, the detection result obtained by detecting the data transport block according to the scheduling allocation signaling of the first type and/or the scheduling allocation signaling of the second type using the feedback resource.

Alternatively, the third transmission module includes at least one of: a seventh transmission unit arranged to in a case that only the scheduling allocation signaling of the first type is successfully detected over a transmission time interval, and detection for the data transport block over the transmission time interval is correct, feed back detection correctness information to the transmitting end which transmits the data transport block according to the feedback resource; an eighth transmission unit arranged to in a case that only the scheduling allocation signaling of the first type is successfully detected over a transmission time interval, detection for the data transport block over the transmission time interval is erroneous, and the transmission time interval is a last transmission time interval within the predetermined time, transmit detection error information to the transmitting end for the data transport block according to the feedback resource; a ninth transmission unit arranged to in a case that the scheduling allocation signaling of the first type and the scheduling allocation signaling of the second type are successfully detected over a transmission time interval, and detection for the data transport block over the transmission time interval is correct, feed back detection correctness information to the transmitting end which transmits the data transport block according to the feedback resource; a tenth transmission unit arranged to in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmit detection error information to the transmitting end for the data transport block according to the feedback resource; an eleventh transmission unit arranged to in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feed back detection correctness information to the transmitting end which transmits the data transport block according to the feedback resource; a twelfth transmission unit arranged to in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feed back detection error information to the transmitting end which transmits the data transport block according to the feedback resource; a thirteenth transmission unit arranged to in a case that only the scheduling allocation signaling of the second type is successfully detected over a transmission time interval, and detection for the data transport block over the transmission time interval is correct, feed back detection correctness information to the transmitting end which transmits the data transport block according to the feedback resource; and a fourteenth transmission unit arranged to in a case that only the scheduling allocation signaling of the second type is successfully detected over a transmission time interval, and detection for the data transport block over the transmission time interval is erroneous, transmit detection error information to the transmitting end for the data transport block according to the feedback resource.

With the present invention, cells of a first type supporting transmission of scheduling allocation signaling and cells of a second type supporting only data transmission are determined; scheduling allocation signaling of a first type and one or more scheduling allocation signaling of a second type are transmitted on the cells of the first type, herein the scheduling allocation signaling of the first type is used for indicating that the same data transport block is transmitted over a plurality of transmission time intervals included within a predetermined time, and the scheduling allocation signaling of the second type transmitted over a predetermined transmission time interval within the predetermined time is used for indicating that the data transport block is transmitted over the predetermined transmission time interval; and the data transport block is transmitted on the cells of the second type according to the scheduling allocation signaling of the first type, and the data transport block is transmitted on the cells of the first type and/or the cells of the second type according to the scheduling allocation signaling of the second type, which solve the problem in the related art that when the carrier aggregation is performed using different types of carrier attributes, the resource utilization rate is not high and the transmission efficiency of the data block is low, thereby achieving the effects of improving the efficiency of data transmission and resource utilization rate.

### Brief Description of Drawings

The accompanying drawings described herein are used to provide a further understanding of the present invention and constitute a part of the present application, and the illustrative embodiments of the present invention and the description thereof are used to explain the present invention, and do not constitute an improper definition of the present invention. In the accompanying drawings:
Fig. 1 is a flowchart of a method for transmitting a data transport block according to an embodiment of the present invention;
Fig. 2 is a flowchart of a method for receiving a data transport block according to an embodiment of the present invention;
Fig. 3 is a structural block diagram of an apparatus for transmitting a data transport block transmission apparatus according to an embodiment of the present invention;
Fig. 4 is a first preferable structural block diagram of an apparatus for transmitting a data transport block according to an embodiment of the present invention;
Fig. 5 is a preferable structural block diagram of a first transmission module 34 in an apparatus for transmitting a data transport block according to an embodiment of the present invention;
Fig. 6 is a second preferable structural block diagram of an apparatus for transmitting a data transport block according to an embodiment of the present invention;
Fig. 7 is a first preferable structural block diagram of a second transmission module 36 in an apparatus for transmitting a data transport block according to an embodiment of the present invention;
Fig. 8 is a second preferable structural block diagram of a second transmission module 36 in an apparatus for transmitting a data transport block according to an embodiment of the present invention;
Fig. 9 is a third preferable structural block diagram of an apparatus for transmitting a data transport block according to an embodiment of the present invention;
Fig. 10 is a structural block diagram of an apparatus for receiving a data transport block according to an embodiment of the present invention;
Fig. 11 is a first preferable structural block diagram of an apparatus for receiving a data transport block according to an embodiment of the present invention;
Fig. 12 is a second preferable structural block diagram of an apparatus for receiving a data transport block according to an embodiment of the present invention;
Fig. 13 is a preferable structural block diagram of a third transmission module 122 in an apparatus for receiving a data transport block according to an embodiment of the present invention;
Fig. 14 is a flowchart of a process at a transmitting end according to a preferred implementation of the present invention; and
Fig. 15 is a diagram of a process at a target receiving end according to a preferred implementation of the present invention.

### Specific Embodiments

Hereinafter, the present invention will be described in detail with reference to accompanying drawings in combination with embodiments. It should be illustrated that, embodiments in the present application and features in the embodiments can be combined with each other without conflicts.

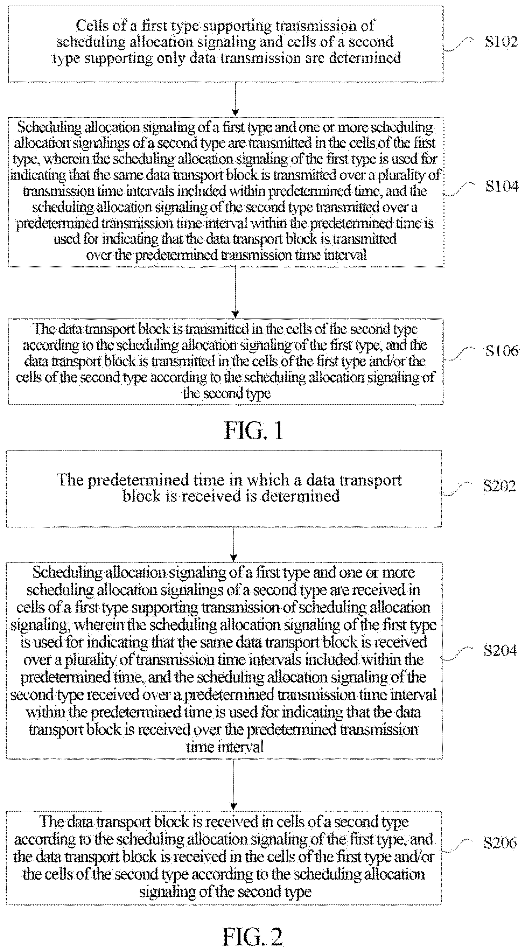

In the present embodiment, a method for transmitting a data transport block is provided. Fig. 1 is a flowchart of a method for transmitting a data transport block according to an embodiment of the present invention. As shown in Fig. 1, the flow includes the following steps.

In step S102, cells of a first type supporting transmission of scheduling allocation signaling and cells of a second type supporting only data transmission are determined. It should be illustrated that the cells of the first type supporting transmission of scheduling allocation signaling and the cells of the second type only supporting data transmission are described for a target receiving end which receives the same data transport block. For the target receiving end, the cells of the first type is defined as a cell on which scheduling allocation signaling, feedback resources and data of a user of the target receiving end can be transmitted, and the cells of the second type is defined as a cell on which only the data of the user of the target receiving end can be transmitted. For the target receiving end, only the data of the user of the target receiving end is transmitted, but for other receiving ends, the cells of the second type may also be a cell on which various signaling is transmitted thereto.

In step S104, scheduling allocation signaling of a first type and one or more scheduling allocation signaling of a second type are transmitted on the cells of the first type, herein the scheduling allocation signaling of the first type is used for indicating that the same data transport block is transmitted over a plurality of transmission time intervals included within a predetermined time, and the scheduling allocation signaling of the second type transmitted over a predetermined transmission time interval within the predetermined time is used for indicating that the data transport block is transmitted over the predetermined transmission time interval.

In step S106, the data transport block is transmitted on the cells of the second type according to the scheduling allocation signaling of the first type, and the data transport block is transmitted on the cells of the first type and/or the cells of the second type according to the scheduling allocation signaling of the second type.

With the above steps, the signaling for data transmission is divided into the scheduling allocation signaling of the first type and the scheduling allocation signaling of the second type, a data transport block is transmitted on the cells of the second type according to the scheduling allocation signaling of the first type, and the data transport block is transmitted on the cells of the first type and/or the cells of the second type according to the scheduling allocation signaling of the second type. In the related art, when carrier aggregation is performed using different types of carrier attributes, there is a problem that the resource utilization rate is not high, and the efficiency of the data block transmission is low, so as to achieve the effects of improving the efficiency of data transmission and the efficiency of resource utilization rate.

In order to fully consider cooperation of two types of scheduling allocation signaling as well as advantages and disadvantages of carriers with different attributes, before transmitting the scheduling allocation signaling of the first type and one or more scheduling allocation signaling of the second type on the cells of the first type, a number of the scheduling allocation signaling of the second type transmitted on the cells of the first type may be adjusted according to a resource competition condition of the cells of the second type. Through the cooperation of the above two types of scheduling allocation signaling, an error probability of the data transport block can be effectively reduced, and the utilization rate of the system resources can be improved.

When the scheduling allocation signaling of the first type is transmitted on the cells of the first type, a plurality of manners may be used. For example, the transmission may be implemented by at least one of: transmitting the first scheduling allocation signaling over a first transmission time interval of the plurality of transmission time intervals included within the predetermined time; or transmitting the first scheduling allocation signaling over a predetermined number K of transmission time intervals before the predetermined time. The specific manner may be flexibly selected according to requirements.

Alternatively, in order to know a condition that the target receiving end receives the data transport block, before transmitting the data transport block on the cells of the second type according to the scheduling allocation signaling of the first type, and transmitting the data transport block on the cells of the first type and/or the cells of the second type according to the scheduling allocation signaling of the second type, a feedback resource may be allocated on the cells of the first type to a target receiving end which receives the data transport block, herein the feedback resource is used for feeding back a detection result for the data transport block.

The scheduling allocation signaling of the second type and the data transport block transmitted according to the scheduling allocation signaling of the second type are within the same transmission time interval. The transmission time interval may or may not be a subset of a plurality of transmission time intervals on the cells of the second type indicated by the scheduling allocation signaling of the first type. When the transmission time interval is a subset of a plurality of transmission time intervals on the cells of the second type indicated by the scheduling allocation signaling of the first type, the scheduling allocation signaling of the second type has a higher priority than that of the scheduling allocation signaling of the first type. That is, the data transport block should be transmitted according to the scheduling allocation signaling of the second type. Accordingly, transmission of the data transport block on the cells of the second type according to the scheduling allocation signaling of the first type and transmission of the data transport block on the cells of the first type and/or the cells of the second type according to the scheduling allocation signaling of the second type may employ the following process: firstly judging whether the same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type; in a case that a judgment result is yes, transmitting the data transport block over the predetermined transmission time interval according to the scheduling allocation signaling of the second type and transmitting the data transport block over other transmission time intervals in the set composed of the plurality of transmission time intervals other than the predetermined transmission time according to the scheduling allocation signaling of the first type; and/or in a case that the judgment result is no, transmitting the data transport block over the predetermined transmission time interval according to the scheduling allocation signaling of the second type and transmitting the data transport block over the plurality of transmission time intervals according to the scheduling allocation signaling of the first type.

Herein, when the data transport block is transmitted on the cells of the first type and/or the cells of the second type according to the scheduling allocation signaling of the second type, the following processing manner may be used: firstly judging whether the scheduling allocation signaling of the second type carries cell index information for indicating a cell on which the data transport block is transmitted; in a case that a judgment result is yes and the cell index information indicates the cells of the first type, transmitting the data transport block on the cells of the first type ;and/or in the case that the judgment result is yes and the cell index information indicates the cells of the second type, or the judgment result is no, transmitting the data transport block on the cells of the second type.

Alternatively, after transmitting the data transport block on the cells of the second type according to the scheduling allocation signaling of the first type, and transmitting the data transport block on the cells of the first type and/or the cells of the second type according to the scheduling allocation signaling of the second type, the following step is further included: receiving a detection result for detection of the data transport block transmitted by a target receiving end which receives the data transport block.

In order to further improve the utilization efficiency of the system resource, a time difference between any two adjacent transmission time intervals in the plurality of transmission time intervals included within the predetermined time may be set to be not less than a Round Trip Time (RTT) between a transmitting end and a target receiving end of the data transport block. For example, it is assumed that the round trip time (RTT for short) between the transmitting end and the target receiving end is L transmission time intervals, and for any two adjacent transmission time intervals in the above set of appointed transmission time intervals, an absolute value of an index difference (that is, a time difference between any two transmission time intervals) should be not less than L. After using this manner, the transmitting end can save L retransmissions after receiving detection correctness information from the target receiving end.

In the present embodiment, a method for receiving a data transport block is further provided. Fig. 2 is a flowchart of a method for receiving a data transport block according to an embodiment of the present invention. As shown in Fig. 2, the flow includes the following steps.

In step S202, a predetermined time in which a data transport block is received is determined.

In step S204, scheduling allocation signaling of a first type and one or more scheduling allocation signaling of a second type are received on cells of a first type supporting transmission of scheduling allocation signaling, herein the scheduling allocation signaling of the first type is used for indicating that the same data transport block is received over a plurality of transmission time intervals included within the predetermined time, and the scheduling allocation signaling of the second type received over a predetermined transmission time interval within the predetermined time is used for indicating that the data transport block is received over the predetermined transmission time interval.

In step S206, the data transport block is received on cells of a second type according to the scheduling allocation signaling of the first type, and the data transport block is received on the cells of the first type and/or the cells of the second type according to the scheduling allocation signaling of the second type.

With the above steps, for the target receiving end, the signaling for data transmission is divided into the scheduling allocation signaling of the first type and the scheduling allocation signaling of the second type, a data transport block is transmitted on the cells of the second type according to the scheduling allocation signaling of the first type, and the data transport block is transmitted on the cells of the first type and/or the cells of the second type according to the scheduling allocation signaling of the second type. In the related art, when carrier aggregation is performed using different types of carrier attributes, there is a problem that the resource utilization rate is not high, and the efficiency of the data block transmission is low, so as to achieve the effects of improving the efficiency of data transmission and the efficiency of resource utilization rate.

Alternatively, before receiving the data transport block on the cells of the second type according to the scheduling allocation signaling of the first type, and receiving the data transport block on the cells of the first type and/or the cells of the second type according to the scheduling allocation signaling of the second type, the following step is further included: receiving, on the cells of the first type, a feedback resource which is allocated by a transmitting end which transmits the data transport block, herein the feedback resource is set for feeding back a detection result obtained by detecting the data transport block.

After receiving the data transport block on the cells of the second type according to the scheduling allocation signaling of the first type, and receiving the data transport block on the cells of the first type and/or the cells of the second type according to the scheduling allocation signaling of the second type, the following step is further included: transmitting, to the transmitting end which transmits the data transport block, the detection result obtained by detecting the data transport block according to the scheduling allocation signaling of the first type and/or the scheduling allocation signaling of the second type using the feedback resource.

Alternatively, transmitting, to the transmitting end which transmits the data transport block, the detection result obtained by detecting the data transport block according to the scheduling allocation signaling of the first type and/or the scheduling allocation signaling of the second type using the feedback resource includes at least one of: in a case that only the scheduling allocation signaling of the first type is successfully detected over a transmission time interval, and detection for the data transport block over the transmission time interval is correct, feeding back detection correctness information to the transmitting end which transmits the data transport block according to the feedback resource; in a case that only the scheduling allocation signaling of the first type is successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource; in a case that the scheduling allocation signaling of the first type and the scheduling allocation signaling of the second type are successfully detected over a transmission time interval, and detection for the data transport block over the transmission time interval is correct, feeding back detection correctness information to the transmitting end which transmits the data transport block according to the feedback resource; in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource; in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feeding back detection correctness information to the transmitting end which transmits the data transport block according to the feedback resource; in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feeding back detection error information to the transmitting end which transmits the data transport block according to the feedback resource; in a case that only the scheduling allocation signaling of the second type is successfully detected over a transmission time interval, and detection for the data transport block over the transmission time interval is correct, feeding back detection correctness information to the transmitting end which transmits the data transport block according to the feedback resource; and in a case that only the scheduling allocation signaling of the second type is successfully detected over a transmission time interval, and detection for the data transport block over the transmission time interval is erroneous, feeding back detection error information to the transmitting end for the data transport block according to the feedback resource.

In the present embodiment, an apparatus for transmitting a data transport block is further provided. The description of the apparatus for achieving the above-described embodiments and preferred implementations which have been described will not be repeated. As used below, the term "apparatus" may be implemented in a combination of software and/or hardware with predetermined functions. Although the apparatus described in the following embodiments is Alternatively implemented in software, implementations of hardware, or a combination of software and hardware, are also possible and contemplated.

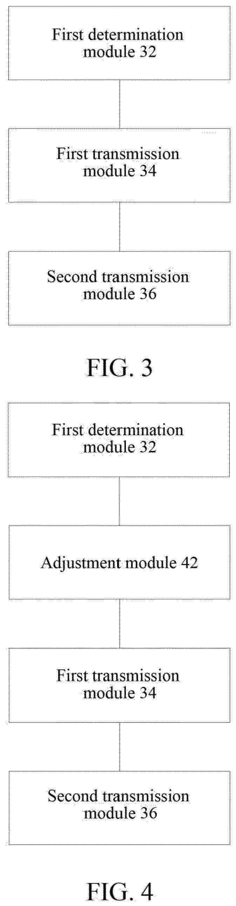

Fig. 3 is a structural block diagram of an apparatus for transmitting a data transport block according to an embodiment of the present invention. As shown in Fig. 3, the apparatus includes a first determination module 32, a first transmission module 34 and a second transmission module 36. The apparatus will be described below.

The first determination module 32 is arranged to determine cells of a first type supporting transmission of scheduling allocation signaling and cells of a second type supporting only data transmission; the first transmission module 34 is connected to the first determination module 32 described above, and is arranged to transmit scheduling allocation signaling of a first type and one or more scheduling allocation signaling of a second type on the cells of the first type, herein the scheduling allocation signaling of the first type is used for indicating that the same data transport block is transmitted over a plurality of transmission time intervals included within a predetermined time, and the scheduling allocation signaling of the second type transmitted over a predetermined transmission time interval within the predetermined time is used for indicating that the data transport block is transmitted over the predetermined transmission time interval; and the second transmission module 36 is connected to the first transmission module 34 described above, and is arranged to transmit the data transport block on the cells of the second type according to the scheduling allocation signaling of the first type, and transmit the data transport block on the cells of the first type and/or the cells of the second type according to the scheduling allocation signaling of the second type.

Fig. 4 is a first preferable structural block diagram of an apparatus for transmitting a data transport block according to an embodiment of the present invention. As shown in Fig. 4, in addition to all the structure illustrated in Fig. 3, the apparatus further includes an adjustment module 42. The apparatus will be described below.

The adjustment module 42 is connected to the first determination module 32 and the first transmission module 34 described above, and is arranged to adjust a number of the scheduling allocation signaling of the second type transmitted on the cells of the first type according to a resource competition condition of the cells of the second type.

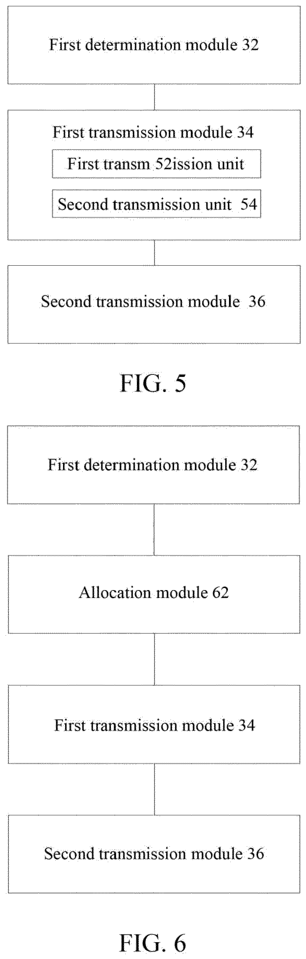

Fig. 5 is a preferable structural block diagram of the first transmission module 34 in the apparatus for transmitting a data transport block according to an embodiment of the present invention. As shown in Fig. 5, the first transmission module 34 includes at least one of a first transmission unit 52 and a second transmission unit 54. The first transmission module 34 will be described below.

The first transmission unit 52 is arranged to transmit the first scheduling allocation signaling over a first transmission time interval of the plurality of transmission time intervals included within the predetermined time; and the second transmission unit 54 is arranged to transmit the first scheduling allocation signaling over a predetermined number K of transmission time intervals before the predetermined time.

Fig. 6 is a second preferable structural block diagram of an apparatus for transmitting a data transport block according to an embodiment of the present invention. As shown in Fig. 6, in addition to all the structure illustrated in Fig. 3, the apparatus further includes an allocation module 62. The allocation module 62 will be described below.

The allocation module 62 is connected to the first transmission module 32 and the second transmission module 34 described above, and is arranged to allocate, on the cells of the first type, a feedback resource to a target receiving end which receives the data transport block, herein the feedback resource is used for feeding back a detection result for the data transport block.

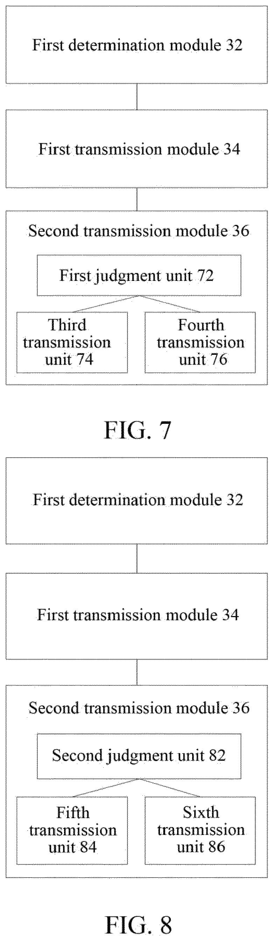

Fig. 7 is a first preferable structural block diagram of the second transmission module 36 in the apparatus for transmitting a data transport block according to an embodiment of the present invention. As shown in Fig. 7, the second transmission module 36 includes a first judgment unit 72, a third transmission unit 74 and/or a fourth transmission unit 76. The second transmission module 36 will be described below.

The first judgment unit 72 is arranged to judge whether the same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type; the third transmission unit 74 is connected to the first judgment unit 72 described above, and is arranged to in a case that a judgment result of the first judgment unit is yes, transmit the data transport block over the predetermined transmission time interval according to the scheduling allocation signaling of the second type and transmit the data transport block over other transmission time intervals in the set composed of the plurality of transmission time intervals other than the predetermined transmission time according to the scheduling allocation signaling of the first type; and/or the fourth transmission unit 76 is connected to the first judgment unit 72 described above, and is arranged to in a case that the judgment result of the first judgment unit is no, transmit the data transport block over the predetermined transmission time interval according to the scheduling allocation signaling of the second type and transmit the data transport block over the plurality of transmission time intervals according to the scheduling allocation signaling of the first type.

Fig. 8 is a second preferable structural block diagram of the second transmission module 36 in the apparatus for transmitting a data transport block according to an embodiment of the present invention. As shown in Fig. 8, the second transmission module 36 includes a second judgment unit 82, a fifth transmission unit 84 and/or a sixth transmission unit 86. The second transmission module 36 will be described below.

The second judgment unit 82 is arranged to judge whether the scheduling allocation signaling of the second type carries cell index information for indicating a cell on which the data transport block is transmitted; the fifth transmission unit 84 is connected to the second judgment unit 82 described above and is arranged to in a case that a judgment result of the second judgment unit is yes and the cell index information indicates the cells of the first type, transmit the data transport block on the cells of the first type ;and/or the sixth transmission unit 86 is connected to the second judgment unit 82 described above and is arranged to in the case that the judgment result of the second judgment unit is yes and the cell index information indicates the cells of the second type, or the judgment result of the second judgment unit is no, transmit the data transport block on the cells of the second type.

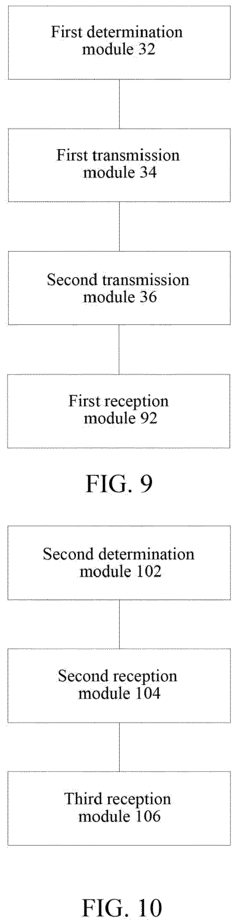

Fig. 9 is a third preferable structural block diagram of an apparatus for transmitting a data transport block according to an embodiment of the present invention. As shown in Fig. 9, in addition to all the structure illustrated in Fig. 3, the apparatus further includes a first reception module 92. The apparatus will be described below.

The first reception module 92 is connected to the second transmission module 36 described above and is arranged to receive a detection result for detection of the data transport block transmitted by a target receiving end which receives the data transport block.

In the present embodiment, an apparatus for receiving a data transport block is further provided. Fig. 10 is a structural block diagram of an apparatus for receiving a data transport block according to an embodiment of the present invention. As shown in Fig. 10, the apparatus includes a second determination module 102, a second reception module 104 and a third reception module 106. The apparatus will be described below.

The second determination module 102 is arranged to determine a predetermined time in which a data transport block is received; the second reception module 104 is connected to the second determination module 102 described above and is arranged to receive scheduling allocation signaling of a first type and one or more scheduling allocation signaling of a second type on cells of a first type supporting transmission of scheduling allocation signaling, herein the scheduling allocation signaling of the first type is used for indicating that the same data transport block is received over a plurality of transmission time intervals included within the predetermined time, and the scheduling allocation signaling of the second type received over a predetermined transmission time interval within the predetermined time is used for indicating that the data transport block is received over the predetermined transmission time interval; and the third reception module 106 is connected to the second reception module 104 described above, and is arranged to receive the data transport block on cells of a second type according to the scheduling allocation signaling of the first type, and receive the data transport block on the cells of the first type and/or the cells of the second type according to the scheduling allocation signaling of the second type.

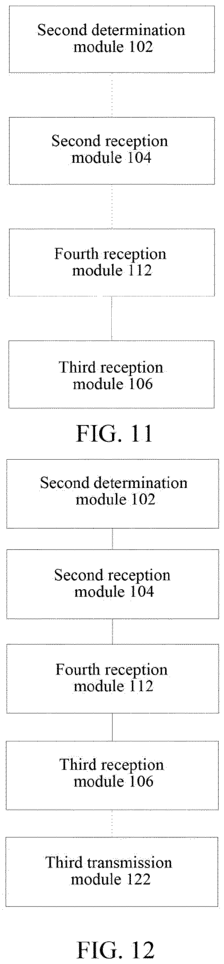

Fig. 11 is a first preferable structural block diagram of an apparatus for receiving a data transport block according to an embodiment of the present invention. As shown in Fig. 11, in addition to all the structure illustrated in Fig. 10, the apparatus further includes a fourth reception module 112. The structure will be described below.

The fourth reception module 112 is connected to the second reception module 104 and the third reception module 106 described above, and is arranged to receive, on the cells of the first type, a feedback resource which is allocated by a transmitting end which transmits the data transport block, herein the feedback resource is used for feeding back a detection result obtained by detecting the data transport block.

Fig. 12 is a second preferable structural block diagram of an apparatus for receiving a data transport block according to an embodiment of the present invention. As shown in Fig. 12, in addition to all the structure illustrated in Fig. 11, the apparatus further includes a third transmission module 122. The apparatus will be described below.

The third transmission module 122 is connected to the third reception module 106 described above, and is arranged to transmit, to the transmitting end which transmits the data transport block, the detection result obtained by detecting the data transport block according to the scheduling allocation signaling of the first type and/or the scheduling allocation signaling of the second type using the feedback resource.

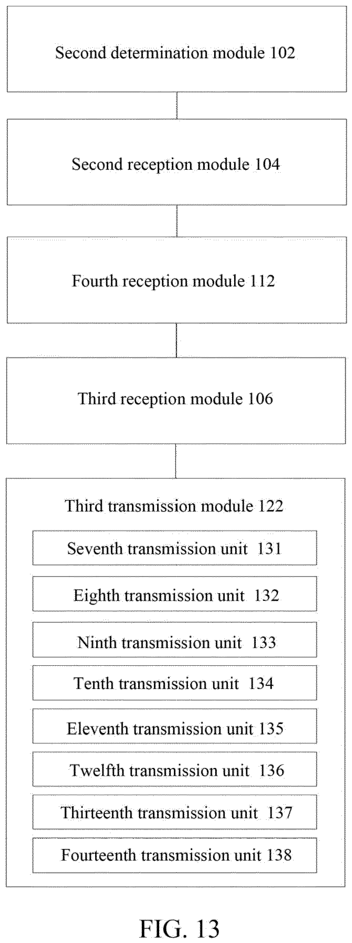

Fig. 13 is a preferable structural block diagram of the third transmission module 122 in the apparatus for receiving a data transport block according to an embodiment of the present invention. As shown in Fig. 13, the third transmission module 122 includes at least one of a seventh transmission unit 131, an eighth transmission unit 132, a ninth transmission unit 133, a tenth transmission unit 134, an eleventh transmission unit 135, a twelfth transmission unit 136, a thirteenth transmission unit 137, and a fourteenth transmission unit 138. The third transmission module 122 will be described below.

The seventh transmission unit 131 is arranged to in a case that only the scheduling allocation signaling of the first type is successfully detected over a transmission time interval, and detection for the data transport block over the transmission time interval is correct, feed back detection correctness information to the transmitting end which transmits the data transport block according to the feedback resource; the eighth transmission unit 132 is arranged to in a case that only the scheduling allocation signaling of the first type is successfully detected over a transmission time interval, detection for the data transport block over the transmission time interval is erroneous, and the transmission time interval is a last transmission time interval within the predetermined time, transmit detection error information to the transmitting end for the data transport block according to the feedback resource; the ninth transmission unit 133 is arranged to in a case that the scheduling allocation signaling of the first type and the scheduling allocation signaling of the second type are successfully detected over a transmission time interval, and detection for the data transport block over the transmission time interval is correct, feed back detection correctness information to the transmitting end which transmits the data transport block according to the feedback resource; the tenth transmission unit 134 is arranged to in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmit detection error information to the transmitting end for the data transport block according to the feedback resource; the eleventh transmission unit 135 is arranged to in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feed back detection correctness information to the transmitting end which transmits the data transport block according to the feedback resource; the twelfth transmission unit 136 is arranged to in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feed back detection error information to the transmitting end which transmits the data transport block according to the feedback resource; the thirteenth transmission unit 137 is arranged to in a case that only the scheduling allocation signaling of the second type is successfully detected over a transmission time interval, and detection for the data transport block over the transmission time interval is correct, feed back detection correctness information to the transmitting end which transmits the data transport block according to the feedback resource; and the fourteenth transmission unit 138 is arranged to in a case that only the scheduling allocation signaling of the second type is successfully detected over a transmission time interval, and detection for the data transport block over the transmission time interval is erroneous, transmit detection error information to the transmitting end for the data transport block according to the feedback resource.

For the above problem in the related art, in the present embodiment, there is provided a method for transmitting data to a user using a plurality of carriers, the method including : for a transmitting end and at least one target receiving end, the transmitting end transmitting data to the target receiving end using two types of cells. For the target receiving end, the cell of the first type may be a cell on which scheduling allocation signaling, feedback resources, and data of a user of the target receiving end can be transmitted, and the cell of the second type may be a cell on which only the data of the user of the target receiving end is transmitted. Each of the cells of the second type has a corresponding cell of the first type. The two types of cells configured by the transmitting end for the target receiving end at least include one cell of the first type and one cell of the second type.

For one of the above-mentioned cells of the second type and cells of a first type paired therewith, the transmitting end and the receiving end appoint a time T which includes a plurality of transmission time intervals. The transmitting end and the receiving end appoint to transmit only one transport block on the cells of the second type on a part or all of the transmission time intervals within T (the transmission time intervals over which the transport block is transmitted are referred to as a set of appointed transmission time intervals. If transport block includes multiple redundancy versions, different redundancy versions may be transmitted over different transmission time intervals.)

The transmitting end and the receiving end are described respectively below.

### At the transmitting end:

A feedback resource is allocated by the transmitting end to the target receiving end on the cells of the first type.

The transmitting end transmits one scheduling allocation signaling of a first type to the target receiving end on the cells of the first type. The scheduling allocation signaling includes information such as a coding and modulation scheme, a frequency domain position etc. of the transport block. According to the scheduling signaling, the transmitting end transmits the transport block to the target receiving end on the cells of the second type over the appointed transmission time interval within the above time T. It should be illustrated that the set of appointed transmission time intervals may include a plurality of transmission time intervals.

Alternatively, the above scheduling allocation signaling of the first type may be transmitted over a first transmission time interval of the set of appointed transmission time intervals within the above time T. Or, the above scheduling allocation signaling of the first type may also be transmitted over K transmission time intervals before the appointed time T. K is an appointed value between the transmitting end and the receiving end.

The transmitting end transmits one or more scheduling allocation signaling of the second type to the target receiving end on the cells of the first type. The scheduling allocation signaling includes information such as a coding and modulation scheme, a frequency domain position etc. of the transport block, and may also include index information of a cell where the transport block is located etc. Each of the scheduling allocation signaling of the second type is transmitted over a certain transmission time interval within the above time T. According to the scheduling signaling, the transmitting end transmits the transport block to the target receiving end over the same transmission time interval. When the scheduling allocation signaling of this type includes the index information of the cell where the transport block is located, according to the scheduling allocation signaling, the transmitting end may transmit the transport block on the cells of the first type or may also transmit the transport block on the cells of the second type. When it does not include the index information of the cell, the transmitting end only transmits the transport block on the cells of the second type according to the indication of the signaling. If the transport block includes a plurality of redundancy versions, for different scheduling allocation signaling of the second type, different redundancy versions of the transport block may be transmitted.

If the transmitting end needs to transmit the transport block on the cells of the second type according to an indication of the scheduling allocation signaling of the second type and the transmission time interval for transmission belongs to the above set of appointed transmission time intervals, the transmitting end transmits the transport block over the transmission time interval according to the above indication of the scheduling allocation signaling of the second type, and the transmitting end still transmits the transport block over other appointed transmission time intervals according to the indication of scheduling allocation signaling of the first type.

The transmitting end detects the feedback resource transmitted by the receiving end at the appointed time according to the agreed rule.

It should be illustrated that there is no mandatory successive time relationship between "the transmitting end allocates a feedback resource to a target receiving end on the cells of the first type" and "the transmitting end transmits one scheduling allocation signaling of the first type to the target receiving end on the cells of the first type" described above, and no matter whether a step is firstly performed or both steps are performed at the same time, the effects of the present solution are not affected.

### At the target receiving end:

From the time when the appointed transmission time interval starts, the target receiving end detects the scheduling allocation signalings of first and second types transmitted by the transmitting end, detects data received over corresponding transmission time intervals according to an indication of the scheduling allocation signaling, and performs feedback according to the following agreed rule.

### Over a certain transmission time interval:

If only the scheduling allocation signaling of the first type is detected, for a transport block over a certain transmission time interval, if the transport block is detected correctly, detection correctness information is fed back to the transmitting end at the appointed time using the feedback resource allocated by the transmitting end. If an error is detected, and the transmission time interval is a last transmission time interval in the set of appointed transmission time intervals, detection error information is fed back to the transmitting end at the appointed time using the feedback resource allocated by the transmitting end. In other cases, explicit detection information is not fed back to the transmitting end.

If the scheduling allocation signaling of the first type and the scheduling allocation signaling of the second type indicating the same transport block are detected or only the scheduling allocation signaling of the second type is detected but the scheduling allocation signaling of the first type indicating the transport block has been detected before the transmission time interval, for a transport block over the transmission time interval, if the transport block is detected correctly, detection correctness information is fed back to the transmitting end at the appointed time using the feedback resource allocated by the transmitting end. If an error is detected, and the transmission time interval is a last transmission time interval in the set of appointed transmission time intervals, detection error information is fed back to the transmitting end at the appointed time using the feedback resource allocated by the transmitting end. In other cases, the transmitting end and the receiving end appoint to use one of the following feedback rules for feedback.

The receiving end does not feed explicit detection information back to the transmitting end.

The receiving end feeds detection error information back to the transmitting end at an appointed time using the feedback resource allocated by the transmitting end.

If only the scheduling allocation signaling of the second type is detected (the scheduling allocation signaling of the first type indicating the same transport block has not been detected before), for a transport block over a certain transmission time interval, if the transport block is detected correctly, detection correctness information is fed back to the transmitting end at the appointed time using the feedback resource allocated by the transmitting end. If an error is detected, detection error information is fed back to the transmitting end at the appointed time using the feedback resource allocated by the transmitting end.

If no scheduling allocation signaling is detected until the transmission time interval, no processing is performed.

By using the above-mentioned scheduling allocation signaling of the first type, the transmitting end can also transmit data even in the absence of resources or with very tight resources, and the transmitting end can flexibly arrange a number of the scheduling allocation signaling of the second type to be transmitted according to resource conditions. Through the cooperation of the both, the advantages and disadvantages of carriers with different attributes are fully utilized, which can not only meet the user requirements at different service levels, but also have the advantages of reducing the error probability of data block transmission, improving the utilization efficiency of system resource, and realizing simplicity etc.

Preferable implementations of the present invention will be described below.

### Preferable implementation one:

The transmitting end transmits data to the target receiving end using two cells, herein a carrier corresponding to cell 1 is an authorized carrier, and a carrier corresponding to cell 2 is a non-authorized carrier. As a preferable implementation, the transmitting end configures the cell 1 as a cell of a first type, and configures the cell 2 as a cell of a second type. The transmitting end and the receiving end appoint a time T which includes M (M>1) transmission time intervals over which the transmitting end transmits the same transport block to the target receiving end (for example, the transmitting end transmits control signaling indicating the used set of transmission time intervals to the target receiving end etc. (including individually transmitting signaling using the following scheduling allocation signaling of the first type etc.)). In order to improve the performance of the receiving end merging data received over a plurality of transmission time intervals, the transport block can be divided into a plurality of redundancy versions, and different redundancy versions may be transmitted over different transmission time intervals.

The preferable implementations at the transmitting end and the receiving end will be described below respectively.

### At the transmitting end:

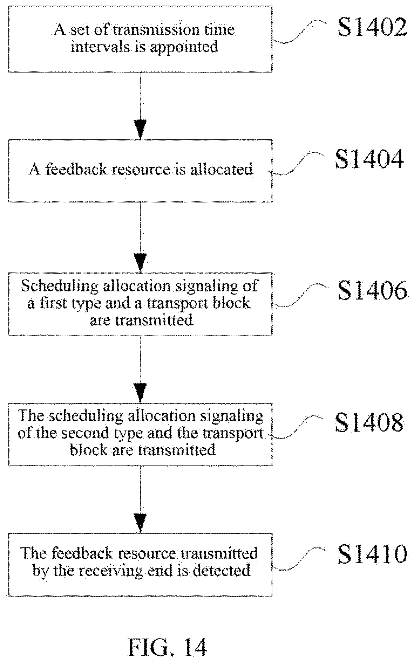

Fig. 14 is a flowchart of a process at the transmitting end according to a preferable implementation of the present invention. As shown in Fig. 14, the flow includes the following steps.

In step S1402, a transmission time interval is appointed with a target receiving end of a data transport block.

In step S1404, a feedback resource is allocated to the target receiving end, i.e., a feedback resource is allocated by the transmitting end to the target receiving end on cell 1. If the cell is a FDD cell, the feedback resource is located on an uplink carrier corresponding to the cell, and if the cell is a TDD cell, the feedback resource is located on an uplink subframe of a carrier corresponding to the cell.

In step S 1406, scheduling allocation signaling of a first type and a data transport block are transmitted, i.e., the transmitting end transmits one scheduling allocation signaling of the first type on the cell 1 to the target receiving end. According to the scheduling signaling, the transmitting end transmits the transport block to the target receiving end on cell 2 over the appointed transmission time interval within the above time T. Similarly, if the cell is an FDD cell, the scheduling allocation signaling of the first type is located on a downlink carrier corresponding to the cell, and if the cell is a TDD cell, the feedback resource is located on a downlink subframe of a carrier corresponding to the cell (the following scheduling allocation signaling of a second type is similar to this, and is not described here).

Herein, the above scheduling allocation signaling of the first type may be transmitted over a first transmission time interval within the above time T. (Of course, the above scheduling allocation signaling of the first type may also be transmitted over K (K is a positive integer) transmission time intervals before the above time T, which is also advantageous for reducing the requirements for the processing capability of the target receiving end). K is an appointed value between the transmitting end and the receiving end.

In step S1408, the scheduling allocation signaling of the second type and the data transport block are transmitted, i.e., the transmitting end transmits one or more scheduling allocation signaling of the second type to the target receiving end on the cell 1, herein the signaling includes index information of the cell where the transport block is located etc. in addition to coding and modulation information and frequency domain position information of the transport block to be transmitted. In contrast to the scheduling allocation signaling of the first type, each of the scheduling allocation signaling of the second type is transmitted over a certain transmission time interval within the above time T. According to the scheduling signaling, the transmitting end transmits the transport block to the target receiving end over the same transmission time interval. According to the scheduling allocation signaling, the transmitting end may transmit the transport block on the cell 1 or may also transmit the transport block on the cell 2.

If the transmitting end needs to transmit the transport block on the cell 2 according to an indication of the scheduling allocation signaling of the second type and the transmission time interval for transmission belongs to the above set of appointed transmission time intervals, the transmitting end transmits the transport block over the transmission time interval according to the above indication of the scheduling allocation signaling of the second type, and the transmitting end still transmits the transport block over other appointed transmission time intervals according to the indication of scheduling allocation signaling of the first type.

In step S1410, the feedback resource transmitted by the receiving end is detected, that is, the transmitting end detects the feedback resource transmitted by the receiving end at the appointed time according to the agreed rule. According to a detection result, the transmitting end may use different processing measures, for example, if detection error information from the target receiving end is received, the transmitting end performs retransmission at a later time etc.

### At the target receiving end:

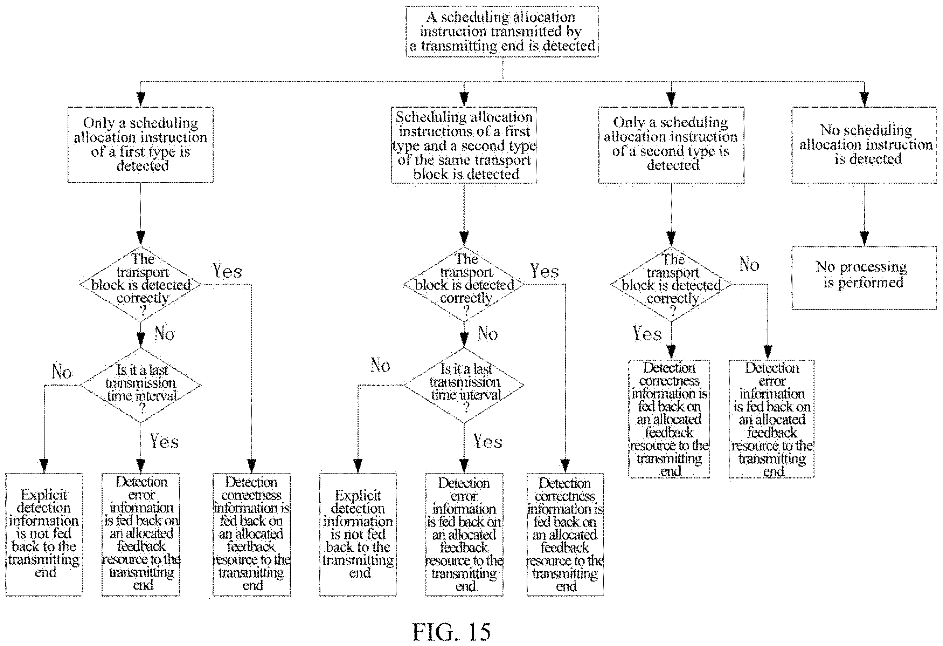

Fig. 15 is a diagram of a process at the target receiving end according to a preferable implementation of the present invention. As shown in Fig. 15, the target receiving end detects the first and second types of scheduling allocation signaling transmitted by the transmitting end, detects data received over corresponding transmission time intervals according to an indication of the scheduling allocation signaling, and performs feedback according to the following agreed rule.

### Over a certain transmission time interval:

If only the scheduling allocation signaling of the first type is detected, for a transport block over a certain transmission time interval, if the transport block is detected correctly (in addition to only detecting the transport block over this transmission time interval, the target receiving end may further merges and detects data of the same transport block transmitted over other transmission intervals before the transmission time interval, and the same applies hereinafter), detection correctness information is fed back to the transmitting end at the appointed time using the feedback resource allocated by the transmitting end. If an error is detected, and the transmission time interval is a last transmission time interval in the set of appointed transmission time intervals, detection error information is fed back to the transmitting end at the appointed time using the feedback resource allocated by the transmitting end. In other cases, explicit detection information is not fed back to the transmitting end.

If the scheduling allocation signaling of the first type and the scheduling allocation signaling of the second type indicating the same transport block are detected or only the scheduling allocation signaling of the second type is detected but the scheduling allocation signaling of the first type indicating the transport block has been detected before the transmission time interval, for a transport block over the transmission time interval, if the transport block is detected correctly, detection correctness information is fed back to the transmitting end at the appointed time using the feedback resource allocated by the transmitting end. If an error is detected, and the transmission time interval is a last transmission time interval in the set of appointed transmission time intervals, detection error information is fed back to the transmitting end at the appointed time using the feedback resource allocated by the transmitting end. In other cases, the transmitting end and the receiving end appoint to use one of the following feedback rules for feedback.
(1) The receiving end does not feed explicit detection information back to the transmitting end.
(2) The receiving end feeds detection error information back to the transmitting end at an appointed time using the feedback resource allocated by the transmitting end.

If only the scheduling allocation signaling of the second type is detected (the scheduling allocation signaling of the first type indicating the same transport block has not been detected before), for a transport block over a certain transmission time interval, if the transport block is detected correctly, detection correctness information is fed back to the transmitting end at the appointed time using the feedback resource allocated by the transmitting end. If an error is detected, detection error information is fed back to the transmitting end at the appointed time using the feedback resource allocated by the transmitting end.

If no scheduling allocation signaling is detected until the transmission time interval, no processing is performed.

Considering that a carrier corresponding to the cell 2 is a non-authorized carrier, the above resources are usually required to be acquired through competition. If the transmitting end does not acquire resources on the carrier within the above appointed time T, the transmitting end may still transmit at very low power on the carrier through the scheduling allocation signaling of the first type. On the one hand, the transmitting end transmits at very low power, which has almost negligible effects on other transmitting ends which compete for resources on the carrier and transmit data at the same time. On the other hand, as the transmitting end transmits the same transport block over a plurality of transmission intervals within the appointed time T, the receiving end may still acquire a considerable signal to noise ratio by receiving the merging. Further, if the transmitting end gets an opportunity to transmit data over one or more transmission time intervals within an appointed time T through competition, the transmitting end may transmit the transport block over the transmission time interval in a more efficient manner by transmitting one or more scheduling allocation signaling of the second type. For example, the transport block is transmitted at higher power, in a higher order modulation mode etc. If the transmitting end does not get an opportunity to transmit data within the appointed time T through competition, the transmitting end may transmit the transport block in a more efficient manner on cell 1 by transmitting one or more scheduling allocation signaling of the second type. The receiving end merges and detects the transport block indicated by the scheduling allocation signaling of the first type and the scheduling allocation signaling of the second type, so that a probability that the transport block is detected correctly is also greatly improved, and the transmitting end may transmit the scheduling allocation signaling of the second type over any transmission time interval within the appointed time T according to a competition resource condition of non-authorized carriers and a resource use condition of authorized carriers, without waiting for the detection feedback condition of the data from the receiving end. In this way, this is not only advantageous for the convenience of scheduling data at the transmitting end, but also is beneficial to reduce a data transmission delay. It can be said that this transmission method has an advantage of fully utilizing the advantages of two types of carriers and improving the utilization efficiency of system resource.

The above solution can also be applied to a condition that the transmitting end transmits data to the target receiving end using multiple (more than two) cells (where at least one carrier is an authorized carrier and another carrier is either a non-authorized carrier or a shared authorized access carrier or a television blank band carrier), which will not be repeated here.

### Preferable implementation two:

The preferable implementation two is similar to the above-described preferable implementation one, except that the transmitting end and the target receiving end appoint a time T, which includes a plurality of transmission time intervals. The transmitting end and the receiving end appoint a part of transmission time intervals within T. As a preferable implementation, it is assumed that a Round Trip Time (RTT for short) between the transmitting end and the target receiving end is L transmission time intervals, and for any two adjacent transmission time intervals in the above set of appointed transmission time intervals, an absolute value of an index difference therebetween should not be less than L. Compared with the preferable implementation one, with this method, the transmitting end can save L retransmissions after receiving the detection correctness information from the target receiving end, thereby, further improving the utilization efficiency of system resource.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices; in some cases, the steps illustrated or described can be performed in an order different from that described here; or, they are respectively made into various integrated circuit modules; or, it is implemented with making several modules or steps of them into a single integrated circuit module.

### Industrial applicability

As described above, the above embodiments and preferable implementations at least solve the problem in the related art that when the carrier aggregation is performed using different types of carrier attributes, the resource utilization rate is not high and the transmission efficiency of the data block is low, thereby achieving the effects of improving the efficiency of data transmission and resource utilization rate.

## Claims

1. A method for transmitting a data transport block, **characterized by** comprising:
determining cells of a first type supporting transmission of scheduling allocation signaling and cells of a second type supporting only data transmission (S102);
transmitting a scheduling allocation signaling of a first type and one or more scheduling allocation signalings of a second type in the cells of the first type, wherein the scheduling allocation signaling of the first type is used for indicating that a same data transport block is transmitted over a plurality of transmission time intervals included within predetermined time, and the scheduling allocation signaling of the second type transmitted over a predetermined transmission time interval within the predetermined time is used for indicating that the data transport block is transmitted over the predetermined transmission time interval (S104); and
transmitting the data transport block in the cells of the second type according to the scheduling allocation signaling of the first type, and transmitting the data transport block in the cells of the first type and/or the cells of the second type according to the scheduling allocation signaling of the second type (S106).

2. The method according to claim 1, wherein before transmitting the scheduling allocation signaling of the first type and one or more scheduling allocation signalings of the second type in the cells of the first type, the method further comprises:
adjusting the number of the scheduling allocation signalings of the second type transmitted in the cells of the first type according to a resource competition condition of the cells of the second type;
or
wherein the scheduling allocation signaling of the first type is transmitted in the cells of the first type by at least one of:
transmitting a first scheduling allocation signaling over a first transmission time interval of the plurality of transmission time intervals included within the predetermined time; and
transmitting the first scheduling allocation signaling over a predetermined number K of transmission time intervals before the predetermined time;
or
wherein before transmitting the data transport block in the cells of the second type according to the scheduling allocation signaling of the first type, and transmitting the data transport block in the cells of the first type and/or the cells of the second type according to the scheduling allocation signaling of the second type, the method further comprises:
allocating, in the cells of the first type, a feedback resource to a target receiving end which receives the data transport block, wherein the feedback resource is used for feeding back a detection result for the data transport block.

3. The method according to claim 1, wherein transmitting the data transport block in the cells of the second type according to the scheduling allocation signaling of the first type, and transmitting the data transport block in the cells of the first type and/or the cells of the second type according to the scheduling allocation signaling of the second type comprises:
judging whether a same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type;
in a case that a judgment result is yes, transmitting the data transport block over the predetermined transmission time interval according to the scheduling allocation signaling of the second type and transmitting the data transport block over other transmission time intervals, other than the predetermined transmission time, in the set composed of the plurality of transmission time intervals according to the scheduling allocation signaling of the first type; and/or
in a case that the judgment result is no, transmitting the data transport block over the predetermined transmission time interval according to the scheduling allocation signaling of the second type and transmitting the data transport block over the plurality of transmission time intervals according to the scheduling allocation signaling of the first type;
or
wherein transmitting the data transport block in the cells of the first type and/or the cells of the second type according to the scheduling allocation signaling of the second type comprises:
judging whether the scheduling allocation signaling of the second type carries cell index information for indicating a cell in which the data transport block is transmitted;
in a case that a judgment result is yes and the cell index information indicates the cells of the first type, transmitting the data transport block in the cells of the first type; and/or
in a case that the judgment result is yes and the cell index information indicates the cells of the second type, or the judgment result is no, transmitting the data transport block in the cells of the second type;
or
wherein after transmitting the data transport block in the cells of the second type according to the scheduling allocation signaling of the first type, and transmitting the data transport block in the cells of the first type and/or the cells of the second type according to the scheduling allocation signaling of the second type, the method further comprises:
receiving a detection result for detection of the data transport block transmitted by a target receiving end which receives the data transport block.

4. The method according to any one of claims 1 to 3, wherein a time difference between any two adjacent transmission time intervals in the plurality of transmission time intervals included within the predetermined time is not less than a Round Trip Time, RTT, between a transmitting end and a target receiving end of the data transport block.

5. A method for receiving a data transport block, **characterized by** comprising:
determining predetermined time in which a data transport block is received (S202);
receiving a scheduling allocation signaling of a first type and one or more scheduling allocation signalings of a second type in cells of a first type supporting transmission of scheduling allocation signaling, wherein the scheduling allocation signaling of the first type is used for indicating that a same data transport block is received over a plurality of transmission time intervals included within the predetermined time, and the scheduling allocation signaling of the second type received over a predetermined transmission time interval within the predetermined time is used for indicating that the data transport block is received over the predetermined transmission time interval (S204); and
receiving the data transport block in cells of a second type according to the scheduling allocation signaling of the first type, and receiving the data transport block in the cells of the first type and/or the cells of the second type according to the scheduling allocation signaling of the second type (S206).

6. The method according to claim 5, wherein before receiving the data transport block in the cells of the second type according to the scheduling allocation signaling of the first type, and receiving the data transport block in the cells of the first type and/or the cells of the second type according to the scheduling allocation signaling of the second type, the method further comprises:
receiving, in the cells of the first type, a feedback resource which is allocated by a transmitting end which transmits the data transport block, wherein the feedback resource is set for feeding back a detection result obtained by detecting the data transport block.

7. The method according to claim 6, wherein after receiving the data transport block in the cells of the second type according to the scheduling allocation signaling of the first type, and receiving the data transport block in the cells of the first type and/or the cells of the second type according to the scheduling allocation signaling of the second type, the method further comprises:
transmitting, to the transmitting end which transmits the data transport block, the detection result obtained by detecting the data transport block according to the scheduling allocation signaling of the first type and/or the scheduling allocation signaling of the second type using the feedback resource.

8. The method according to claim 7, wherein, transmitting, to the transmitting end which transmits the data transport block, the detection result obtained by detecting the data transport block according to the scheduling allocation signaling of the first type and/or the scheduling allocation signaling of the second type using the feedback resource comprises at least one of:
in a case that only the scheduling allocation signaling of the first type is successfully detected over a transmission time interval, and detection for the data transport block over the transmission time interval is correct, feeding back detection correctness information to the transmitting end which transmits the data transport block according to the feedback resource;
in a case that only the scheduling allocation signaling of the first type is successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource;
in a case that the scheduling allocation signaling of the first type and the scheduling allocation signaling of the second type are successfully detected over a transmission time interval, and detection for the data transport block over the transmission time interval is correct, feeding back detection correctness information to the transmitting end which transmits the data transport block according to the feedback resource;
in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmitting detection error information to the transmitting end for the data transport block according to the feedback resource;
in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feeding back detection correctness information to the transmitting end which transmits the data transport block according to the feedback resource;
in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feeding back detection error information to the transmitting end which transmits the data transport block according to the feedback resource;
in a case that only the scheduling allocation signaling of the second type is successfully detected over a transmission time interval, and detection for the data transport block over the transmission time interval is correct, feeding back detection correctness information to the transmitting end which transmits the data transport block according to the feedback resource; and
in a case that only the scheduling allocation signaling of the second type is successfully detected over a transmission time interval, and detection for the data transport block over the transmission time interval is erroneous, transmitting detection error information to the transmitting end for the data transport block according to the feedback resource.

9. An apparatus for transmitting a data transport block, **characterized by** comprising:
a first determination module (32) arranged to determine cells of a first type supporting transmission of scheduling allocation signaling and cells of a second type supporting only data transmission;
a first transmission module (34) arranged to transmit a scheduling allocation signaling of a first type and one or more scheduling allocation signalings of a second type in the cells of the first type, wherein the scheduling allocation signaling of the first type is used for indicating that a same data transport block is transmitted over a plurality of transmission time intervals included within predetermined time, and the scheduling allocation signaling of the second type transmitted over a predetermined transmission time interval within the predetermined time is used for indicating that the data transport block is transmitted over the predetermined transmission time interval; and
a second transmission module (36) arranged to transmit the data transport block in the cells of the second type according to the scheduling allocation signaling of the first type, and transmit the data transport block in the cells of the first type and/or the cells of the second type according to the scheduling allocation signaling of the second type.

10. The apparatus according to claim 9, further comprising:
an adjustment module (42) arranged to adjust the number of the scheduling allocation signalings of the second type transmitted in the cells of the first type according to a resource competition condition of the cells of the second type;
or
wherein the first transmission module (34) comprises at least one of:
a first transmission unit (52) arranged to transmit a first scheduling allocation signaling over a first transmission time interval of the plurality of transmission time intervals included within the predetermined time; and
a second transmission unit (54) arranged to transmit the first scheduling allocation signaling over a predetermined number K of transmission time intervals before the predetermined time;
or
further comprising:
an allocation module (62) arranged to allocate, in the cells of the first type, a feedback resource to a target receiving end which receives the data transport block, wherein the feedback resource is used for feeding back a detection result for the data transport block.

11. The apparatus according to claim 9, wherein the second transmission module (36) comprises:
a first judgment unit (72) arranged to judge whether a same predetermined transmission time interval over which the scheduling allocation signaling of the second type is transmitted and the data transport block is transmitted according to the scheduling allocation signaling of the second type belongs to a set composed of the plurality of transmission time intervals indicated by the scheduling allocation signaling of the first type;
a third transmission unit (74), arranged to in a case that a judgment result of the first judgment unit is yes, transmit the data transport block over the predetermined transmission time interval according to the scheduling allocation signaling of the second type and transmit the data transport block over other transmission time intervals, other than the predetermined transmission time, in the set composed of the plurality of transmission time intervals according to the scheduling allocation signaling of the first type; and/or
a fourth transmission unit (76) arranged to in a case that the judgment result of the first judgment unit is no, transmit the data transport block over the predetermined transmission time interval according to the scheduling allocation signaling of the second type and transmit the data transport block over the plurality of transmission time intervals according to the scheduling allocation signaling of the first type;
or
wherein the second transmission module (36) comprises:
a second judgment unit (82) arranged to judge whether the scheduling allocation signaling of the second type carries cell index information for indicating a cell in which the data transport block is transmitted;
a fifth transmission unit (84) arranged to in a case that a judgment result of the second judgment unit is yes and the cell index information indicates the cells of the first type, transmit the data transport block in the cells of the first type; and/or
a sixth transmission unit (86) arranged to in the case that the judgment result of the second judgment unit is yes and the cell index information indicates the cells of the second type, or the judgment result of the second judgment unit is no, transmit the data transport block in the cells of the second type;
or
further comprising:
a first reception module (92) arranged to receive a detection result for detection of the data transport block transmitted by a target receiving end which receives the data transport block.

12. An apparatus for receiving a data transport block, **characterized by** comprising:
a second determination module (102) arranged to determine predetermined time in which a data transport block is received;
a second reception module (104) arranged to receive a scheduling allocation signaling of a first type and one or more scheduling allocation signalings of a second type in cells of a first type supporting transmission of scheduling allocation signaling, wherein the scheduling allocation signaling of the first type is used for indicating that a same data transport block is received over a plurality of transmission time intervals included within predetermined time, and the scheduling allocation signaling of the second type received over a predetermined transmission time interval within the predetermined time is used for indicating that the data transport block is received over the predetermined transmission time interval; and
a third reception module (106) arranged to receive the data transport block in cells of a second type according to the scheduling allocation signaling of the first type, and receive the data transport block in the cells of the first type and/or the cells of the second type according to the scheduling allocation signaling of the second type.

13. The apparatus according to claim 12, further comprising:
a fourth reception module (112) arranged to receive, in the cells of the first type, a feedback resource which is allocated by a transmitting end which transmits the data transport block, wherein the feedback resource is used for feeding back a detection result obtained by detecting the data transport block.

14. The apparatus according to claim 13, further comprising:
a third transmission module (122) arranged to transmit, to the transmitting end which transmits the data transport block, the detection result obtained by detecting the data transport block according to the scheduling allocation signaling of the first type and/or the scheduling allocation signaling of the second type using the feedback resource.

15. The apparatus according to claim 14, wherein, the third transmission module (122) comprises at least one of:
a seventh transmission unit (131) arranged to in a case that only the scheduling allocation signaling of the first type is successfully detected over a transmission time interval, and detection for the data transport block over the transmission time interval is correct, feed back detection correctness information to the transmitting end which transmits the data transport block according to the feedback resource;
an eighth transmission unit (132) arranged to in a case that only the scheduling allocation signaling of the first type is successfully detected over a transmission time interval, detection for the data transport block over the transmission time interval is erroneous, and the transmission time interval is a last transmission time interval within the predetermined time, transmit detection error information to the transmitting end for the data transport block according to the feedback resource;
a ninth transmission unit (133) arranged to in a case that the scheduling allocation signaling of the first type and the scheduling allocation signaling of the second type are successfully detected over a transmission time interval, and detection for the data transport block over the transmission time interval is correct, feed back detection correctness information to the transmitting end which transmits the data transport block according to the feedback resource;
a tenth transmission unit (134) arranged to in a case that the scheduling allocation signaling of the first type and the scheduling allocation signaling of the second type are successfully detected over a transmission time interval, detection for the data transport block over the transmission time interval is erroneous, and the transmission time interval is a last transmission time interval within the predetermined time, transmit detection error information to the transmitting end for the data transport block according to the feedback resource;
an eleventh transmission unit (135) arranged to in a case that only the scheduling allocation signaling of the second type is successfully detected over a transmission time interval, but the scheduling allocation signaling of the first type indicating the data transport block has been detected before the transmission time interval, and detection for the data transport block over the transmission time interval is correct, feed back detection correctness information to the transmitting end which transmits the data transport block according to the feedback resource;
a twelfth transmission unit (136) arranged to in a case that only the scheduling allocation signaling of the second type is successfully detected over a transmission time interval, but the scheduling allocation signaling of the first type indicating the data transport block has been detected before the transmission time interval, detection for the data transport block over the transmission time interval is erroneous and the transmission time interval is a last transmission time interval within the predetermined time, feed back detection error information to the transmitting end which transmits the data transport block according to the feedback resource;
a thirteenth transmission unit (137) arranged to in a case that only the scheduling allocation signaling of the second type is successfully detected over a transmission time interval, and detection for the data transport block over the transmission time interval is correct, feed back detection correctness information to the transmitting end which transmits the data transport block according to the feedback resource; and
a fourteenth transmission unit (138) arranged to in a case that only the scheduling allocation signaling of the second type is successfully detected over a transmission time interval, and detection for the data transport block over the transmission time interval is erroneous, transmit detection error information to the transmitting end for the data transport block according to the feedback resource.

## Patentansprüche

1. Verfahren zum Übertragen eines Datentransportblocks, **dadurch gekennzeichnet, dass** es Folgendes umfasst:
Bestimmen von Zellen eines ersten Typs, die die Übertragung von Planungs-Zuordnungssignalisierung unterstützen und Zellen eines zweiten Typs, die nur die Datenübertragung (S102) unterstützen;
Übertragen einer Planungs-Zuordnungssignalisierung eines ersten Typs und einer oder mehrerer Planungs-Zuordnungssignalisierungen eines zweiten Typs in den Zellen des ersten Typs, wobei die Planungs-Zuordnungssignalisierung des ersten Typs verwendet wird zur Anzeige, dass ein gleicher Datentransportblock über eine Mehrzahl von Übertragungszeitintervallen übertragen wird, die in der vorgegebenen Zeit enthalten sind, und die Planungs-Zuordnungssignalisierung des zweiten Typs, die über ein vorgegebenes Übertragungszeitintervall innerhalb der vorgegebenen Zeit übertragen wird, verwendet wird zur Anzeige, dass der Datentransportblock über das vorgegebene Übertragungszeitintervall übertragen wird (S104); und
Übertragen des Datentransportblocks in die Zellen des zweiten Typs gemäß der Planungs-Zuordnungssignalisierung des ersten Typs und Übertragen des Datentransportblocks in die Zellen des ersten Typs und/oder die Zellen des zweiten Typs gemäß der Planungs-Zuordnungssignalisierung des zweiten Typs (S106).

2. Verfahren nach Anspruch 1, wobei das Verfahren vor Übertragen der Planungs-Zuordnungssignalisierung des ersten Typs und einer oder mehrerer Planungs-Zuordnungssignalisierungen des zweiten Typs in die Zellen des ersten Typs weiter Folgendes umfasst:
Anpassen der Anzahl der Planungs-Zuordnungssignalisierungen des zweiten Typs, die in die Zellen des ersten Typs gemäß einer Ressourcenwettbewerbsbedingung der Zellen des zweiten Typs übertragen werden;
oder
wobei die Planungs-Zuordnungssignalisierung des ersten Typs in die Zellen des ersten Typs durch wenigstens eines der Folgenden übertragen wird:
Übertragen einer ersten Planungs-Zuordnungssignalisierung über ein erstes Übertragungszeitintervall der Mehrzahl von Übertragungszeitintervallen, die in der vorgegebenen Zeit enthalten sind; und
Übertragen der ersten Planungs-Zuordnungssignalisierung über eine vorgegebene Anzahl K von Übertragungszeitintervallen vor der vorgegebenen Zeit;
oder
wobei das Verfahren vor dem Übertragen des Datentransportblocks in die Zellen des zweiten Typs gemäß der Planungs-Zuordnungssignalisierung des ersten Typs und Übertragen des Datentransportblocks in die Zellen des ersten Typs und/oder die Zellen des zweiten Typs gemäß der Planungs-Zuordnungssignalisierung des zweiten Typs weiter Folgendes umfasst:
Zuordnen, in die Zellen des ersten Typs, einer Feedback-Ressource zu einer Target-Empfangsseite, die den Datentransportblock empfängt, wobei die Feedback-Ressource verwendet wird zum Rückführen eines Erfassungsergebnisses für den Datentransportblock.

3. Verfahren nach Anspruch 1, wobei das Übertragen des Datentransportblocks in die Zellen des zweiten Typs gemäß der Planungs-Zuordnungssignalisierung des ersten Typs und das Übertragen des Datentransportblocks in die Zellen des ersten Typs und/oder die Zellen des zweiten Typs gemäß der Planungs-Zuordnungssignalisierung des zweiten Typs Folgendes umfasst:
Beurteilen, ob ein gleiches vorgegebenes Übertragungszeitintervall, über welches die Planungs-Zuordnungssignalisierung des zweiten Typs übertragen wird, und der Datentransportblock gemäß der Planungs-Zuordnungssignalisierung des zweiten Typs übertragen wird, einem Satz angehört, der aus der Mehrzahl der Übertragungszeitintervalle gebildet wird, die von der Planungs-Zuordnungssignalisierung des ersten Typs angegeben werden;
falls das Ergebnis einer Beurteilung "ja" ist, Übertragen des Datentransportblocks über das vorgegebene Übertragungszeitintervall gemäß der Planungs-Zuordnungssignalisierung des zweiten Typs und Übertragen des Datentransportblock über weitere Übertragungszeitintervalle, die nicht der vorgegebenen Übertragungszeit entsprechen, in dem Satz, der aus der Mehrzahl von Übertragungszeitintervallen gemäß der Planungs-Zuordnungssignalisierung des ersten Typs gebildet wird; und/oder
falls das Ergebnis der Beurteilung "nein" ist, Übertragen des Datentransportblocks über das vorgegebene Übertragungszeitintervall gemäß der Planungs-Zuordnungssignalisierung des zweiten Typs und Übertragen des Datentransportblocks über die Mehrzahl von Übertragungszeitintervallen gemäß der Planungs-Zuordnungssignalisierung des ersten Typs;
oder
wobei das Übertragen des Datentransportblocks in die Zellen des ersten Typs und/oder die Zellen des zweiten Typs gemäß der Planungs-Zuordnungssignalisierung des zweiten Typs Folgendes umfasst:
Beurteilen, ob die Planungs-Zuordnungssignalisierung des zweiten Typs Zellindexinformationen trägt zur Anzeige einer Zelle, in die der Datentransportblock übertragen wird;
falls das Ergebnis einer Beurteilung "ja" ist und die Zellindexinformation die Zellen des ersten Typs angibt, Übertragen des Datentransportblocks in die Zellen des ersten Typs; und/oder
falls das Ergebnis der Beurteilung "ja" ist und die Zellindexinformation die Zellen des zweiten Typs angibt oder das Ergebnis der Beurteilung "nein" ist, Übertragen des Datentransportblocks in die Zellen des zweiten Typs;
oder
wobei das Verfahren nach dem Übertragen des Datentransportblocks in die Zellen des zweiten Typs gemäß der Planungs-Zuordnungssignalisierung des ersten Typs und dem Übertragen des Datentransportblocks in die Zellen des ersten Typs und/oder die Zellen des zweiten Typs gemäß der Planungs-Zuordnungssignalisierung des zweiten Typs weiter Folgendes umfasst:
Empfangen eines Erfassungsergebnisses für das Erfassen des Datentransportblocks, der von einer Target-Empfangsseite übertragen wird, die den Datentransportblock empfängt.

4. Verfahren nach einem der Ansprüche 1 bis 3, wobei eine Zeitdifferenz zwischen zwei beliebigen benachbarten Übertragungszeitintervallen in der Mehrzahl von Übertragungszeitintervallen, die in der vorgegebenen Zeit enthalten sind, nicht geringer als eine Round Trip Time (RTT) zwischen einer Übertragungsseite und einer Target-Empfangsseite des Datentransportblocks ist.

5. Verfahren zum Empfangen eines Datentransportblocks, **dadurch gekennzeichnet, dass** es Folgendes umfasst:
Bestimmen einer vorgegebenen Zeit, in der der Datentransportblock empfangen wird (S202);
Empfangen einer Planungs-Zuordnungssignalisierung eines ersten Typs und einer oder mehrerer Planungs-Zuordnungssignalisierungen eines zweiten Typs in den Zellen eines ersten Typs, der die Übertragung der Planungs-Zuordnungssignalisierung unterstützt, wobei die Planungs-Zuordnungssignalisierung des ersten Typs verwendet wird zur Anzeige, dass ein gleicher Datentransportblock über eine Mehrzahl von Übertragungszeitintervallen empfangen wird, die in der vorgegebenen Zeit enthalten sind, und der Planungs-Zuordnungssignalisierung des zweiten Typs, die über ein vorgegebenes Übertragungszeitintervall innerhalb der vorgegebenen Zeit empfangen wird, verwendet wird zur Anzeige, dass der Datentransportblock über das vorgegebene Übertragungszeitintervall (S204) empfangen wird; und
Empfangen des Datentransportblocks in Zellen eines zweiten Typs gemäß der Planungs-Zuordnungssignalisierung des ersten Typs und Empfangen des Datentransportblocks in den Zellen des ersten Typs und/oder den Zellen des zweiten Typs gemäß der Planungs-Zuordnungssignalisierung des zweiten Typs (S206).

6. Verfahren nach Anspruch 5, wobei das Verfahren vor dem Empfangen des Datentransportblocks in den Zellen des zweiten Typs gemäß der Planungs-Zuordnungssignalisierung des ersten Typs und Empfangen des Datentransportblocks in den Zellen des ersten Typs und/oder den Zellen des zweiten Typs gemäß der Planungs-Zuordnungssignalisierung des zweiten Typs weiter Folgendes umfasst:
Empfangen, in den Zellen des ersten Typs, einer Feedback-Ressource, die von einer den Datentransportblock übertragenden Übertragungsseite, zugeordnet wird, wobei die Feedback-Ressource eingestellt wird zum Rückführen eines Erfassungsergebnisses, das durch Erfassen des Datentransportblocks erhalten wird.

7. Verfahren nach Anspruch 6, wobei das Verfahren nach Empfangen des Datentransportblocks in den Zellen des zweiten Typs gemäß der Planungs-Zuordnungssignalisierung des ersten Typs und Empfangen des Datentransportblocks in den Zellen des ersten Typs und/oder den Zellen des zweiten Typs gemäß der Planungs-Zuordnungssignalisierung des zweiten Typs weiter Folgendes umfasst:
Übertragen, an die den Datentransportblock übertragende Übertragungsseite, des Erfassungsergebnisses, das durch Erfassen des Datentransportblocks gemäß der Planungs-Zuordnungssignalisierung des ersten Typs und/oder der Planungs-Zuordnungssignalisierung des zweiten Typs durch Verwendung der Feedback-Ressource erhalten wird.

8. Verfahren nach Anspruch 7, wobei das Übertragen, an die den Datentransportblock übertragende Übertragungsseite, des Erfassungsergebnisses, das durch Erfassen des Datentransportblocks gemäß der Planungs-Zuordnungssignalisierung des ersten Typs und/oder der Planungs-Zuordnungssignalisierung des zweiten Typs durch Verwendung der Feedback-Ressource erhalten wird, wenigstens eines der Folgenden umfasst:
falls nur die Planungs-Zuordnungssignalisierung des ersten Typs über ein Übertragungszeitintervall erfolgreich erfasst wird, und die Erfassung für den Datentransportblock über das Übertragungszeitintervall korrekt ist, Rückführen der Information über das korrekte Erfassen an die Übertragungsseite, die den Datentransportblock gemäß der Feedback-Ressource überträgt;
falls nur die Planungs-Zuordnungssignalisierung des ersten Typs über ein Übertragungszeitintervall erfolgreich erfasst wird, die Erfassung für den Datentransportblock über das Übertragungszeitintervall fehlerhaft ist und das Übertragungszeitintervall ein letztes Übertragungszeitintervall innerhalb der vorgegebenen Zeit ist, Übertragen der Information über den Erfassungsfehler an die Übertragungsseite für den Datentransportblock gemäß der Feedback-Ressource;
falls die Planungs-Zuordnungssignalisierung des ersten Typs und die Planungs-Zuordnungssignalisierung des zweiten Typs über ein Übertragungszeitintervall erfolgreich erfasst werden und die Erfassung für den Datentransportblock über das Übertragungszeitintervall korrekt ist, Rückführen der Information über das korrekte Erfassen an die Übertragungsseite, die den Datentransportblock gemäß der Feedback-Ressource überträgt;
falls die Planungs-Zuordnungssignalisierung des ersten Typs und die Planungs-Zuordnungssignalisierung des zweiten Typs über ein Übertragungszeitintervall erfolgreich erfasst werden, die Erfassung für den Datentransportblock über das Übertragungszeitintervall fehlerhaft ist und das Übertragungszeitintervall ein letztes Übertragungszeitintervall innerhalb der vorgegebenen Zeit ist, Übertragen der Information über den Erfassungsfehler an die Übertragungsseite für den Datentransportblock gemäß der Feedback-Ressource;
falls nur die Planungs-Zuordnungssignalisierung des zweiten Typs über ein Übertragungszeitintervall erfolgreich erfasst wird, aber die Planungs-Zuordnungssignalisierung des ersten Typs, die anzeigt, dass der Datentransportblock vor dem Übertragungszeitintervall erfasst wurde und die Erfassung für den Datentransportblock über das Übertragungszeitintervall korrekt ist, Rückführen der Information über das korrekte Erfassen an die Übertragungsseite, die den Datentransportblock gemäß der Feedback-Ressource überträgt;
falls nur die Planungs-Zuordnungssignalisierung des zweiten Typs über ein Übertragungszeitintervall erfolgreich erfasst wird, aber die Planungs-Zuordnungssignalisierung des ersten Typs, die anzeigt, dass der Datentransportblock vor dem Übertragungszeitintervall erfasst wurde, die Erfassung für den Datentransportblock über das Übertragungszeitintervall fehlerhaft ist und das Übertragungszeitintervall ein letztes Übertragungszeitintervall innerhalb der vorgegebenen Zeit ist, Rückführen der Information über den Erfassungsfehler an die Übertragungsseite, die den Datentransportblock gemäß der Feedback-Ressource überträgt;
falls nur die Planungs-Zuordnungssignalisierung des zweiten Typs über ein Übertragungszeitintervall erfolgreich erfasst wird und die Erfassung für den Datentransportblock über das Übertragungszeitintervall korrekt ist, Rückführen der Information über das korrekte Erfassen an die Übertragungsseite, die den Datentransportblock gemäß der Feedback-Ressource überträgt; und
falls nur die Planungs-Zuordnungssignalisierung des zweiten Typs über ein Übertragungszeitintervall erfolgreich erfasst wird und die Erfassung für den Datentransportblock über das Übertragungszeitintervall fehlerhaft ist, Übertragen der Information über den Erfassungsfehler an die Übertragungsseite für den Datentransportblock gemäß der Feedback-Ressource.

9. Vorrichtung zum Übertragen eines Datentransportblocks, **dadurch gekennzeichnet, dass** sie Folgendes umfasst:
ein erstes Bestimmungsmodul (32), das angeordnet ist, um Zellen eines ersten Typs, die die Übertragung der Planungs-Zuordnungssignalisierung unterstützen, und Zellen eines zweiten Typs, die nur die Datenübertragung unterstützen, zu bestimmen;
ein erstes Übertragungsmodul (34), das angeordnet ist, um eine Planungs-Zuordnungssignalisierung eines ersten Typs und eine oder mehrere Planungs-Zuordnungssignalisierungen eines zweiten Typs in den Zellen des ersten Typs zu übertragen, wobei die Planungs-Zuordnungssignalisierung des ersten Typs verwendet wird zur Anzeige, dass ein gleicher Datentransportblock über eine Mehrzahl von Übertragungszeitintervallen übertragen wird, die in der vorgegebenen Zeit enthalten sind, und die Planungs-Zuordnungssignalisierung des zweiten Typs, die über ein vorgegebenes Übertragungszeitintervall innerhalb der vorgegebenen Zeit übertragen wird, verwendet wird zur Anzeige, dass der Datentransportblock über das vorgegebene Übertragungszeitintervall übertragen wird; und
ein zweites Übertragungsmodul (36), das angeordnet ist, um den Datentransportblock in die Zellen des zweiten Typs gemäß der Planungs-Zuordnungssignalisierung des ersten Typs zu übertragen und den Datentransportblock in die Zellen des ersten Typs und/oder die Zellen des zweiten Typs gemäß der Planungs-Zuordnungssignalisierung des zweiten Typs zu übertragen.

10. Vorrichtung nach Anspruch 9, weiter umfassend:
ein Anpassungsmodul (42), das angeordnet ist zum Anpassen der Anzahl der Planungs-Zuordnungssignalisierungen des zweiten Typs, die in die Zellen des ersten Typs gemäß einer Ressourcenwettbewerbsbedingung der Zellen des zweiten Typs übertragen werden;
oder
wobei das erste Übertragungsmodul (34) wenigstens eines der Folgenden umfasst:
eine erste Übertragungseinheit (52), die angeordnet ist zum Übertragen einer ersten Planungs-Zuordnungssignalisierung über ein erstes Übertragungszeitintervall der Mehrzahl von Übertragungszeitintervallen, die in der vorgegebenen Zeit enthalten sind; und
eine zweite Übertragungseinheit (54), die angeordnet ist zum Übertragen der ersten Planungs-Zuordnungssignalisierung über eine vorgegebene Anzahl K von Übertragungszeitintervallen vor der vorgegebenen Zeit;
oder
weiter umfassend:
ein Zuordnungsmodul (62), das angeordnet ist zum Zuordnen, in die Zellen des ersten Typs, einer Feedback-Ressource zu einer Target-Empfangsseite, die den Datentransportblock empfängt, wobei die Feedback-Ressource verwendet wird zum Rückführen eines Erfassungsergebnisses für den Datentransportblock.

11. Vorrichtung nach Anspruch 9, wobei das zweite Übertragungsmodul (36) Folgendes umfasst:
eine erste Beurteilungseinheit (72), die angeordnet ist zum Beurteilen, ob ein gleiches vorgegebenes Übertragungszeitintervall, über das die Planungs-Zuordnungssignalisierung des zweiten Typs übertragen wird, und der Datentransportblock, der gemäß der Planungs-Zuordnungssignalisierung des zweiten Typs übertragen wird, einem Satz angehört, der aus der Mehrzahl der Übertragungszeitintervalle gebildet, die von der Planungs-Zuordnungssignalisierung des ersten Typs angegeben werden;
eine dritte Übertragungseinheit (74), die angeordnet ist, um in dem Fall, dass das Beurteilungsergebnis der ersten Beurteilungseinheit "ja" ist, den Datentransportblock über das vorgegebene Übertragungszeitintervall gemäß der Planungs-Zuordnungssignalisierung des zweiten Typs zu übertragen und den Datentransportblock über weitere Übertragungszeitintervalle, die nicht der vorgegebenen Übertragungszeit entsprechen, in dem Satz zu übertragen, der aus der Mehrzahl von Übertragungszeitintervallen gemäß der Planungs-Zuordnungssignalisierung des ersten Typs gebildet ist; und/oder
eine vierte Übertragungseinheit (76), die angeordnet ist, um in dem Fall, dass das Beurteilungsergebnis der ersten Beurteilungseinheit "nein" ist, den Datentransportblock über das vorgegebene Übertragungszeitintervall gemäß der Planungs-Zuordnungssignalisierung des zweiten Typs zu übertragen und den Datentransportblock über die Mehrzahl von Übertragungszeitintervallen gemäß der Planungs-Zuordnungssignalisierung des ersten Typs zu übertragen;
oder
wobei das zweite Übertragungsmodul (36) Folgendes umfasst:
eine zweite Beurteilungseinheit (82), die angeordnet ist, um zu beurteilen, ob die Planungs-Zuordnungssignalisierung des zweiten Typs Zellindexinformationen trägt zur Anzeige einer Zelle, in die der Datentransportblock übertragen wird;
eine fünfte Übertragungseinheit (84), die angeordnet ist, um in dem Fall, dass das Beurteilungsergebnis der zweiten Beurteilungseinheit "ja" ist und die Zellindexinformation die Zellen des ersten Typs angibt, den Datentransportblock in die Zellen des ersten Typs zu übertragen; und/oder
eine sechste Übertragungseinheit (86), die angeordnet ist, um in dem Fall, dass das Beurteilungsergebnis der zweiten Beurteilungseinheit "ja" ist und die Zellindexinformation die Zellen des zweiten Typs angibt, oder das Beurteilungsergebnis der zweiten Beurteilungseinheit "nein" ist, den Datentransportblock in die Zellen des zweiten Typs zu übertragen;
oder
weiter umfassend:
ein erstes Empfangsmodul (92), das angeordnet ist, um ein Erfassungsergebnisses zum Erfassen des Datentransportblocks zu empfangen, der von einer Target-Empfangsseite übertragen wird, die den Datentransportblock empfängt.

12. Vorrichtung zum Empfangen eines Datentransportblocks, **dadurch gekennzeichnet, dass** sie Folgendes umfasst:
ein zweites Bestimmungsmodul (102), das angeordnet ist, um die vorgegebene Zeit zu bestimmen, in der ein Datentransportblock empfangen wird;
ein zweites Empfangsmodul (104), das angeordnet ist, um eine Planungs-Zuordnungssignalisierung eines ersten Typs und eine oder mehrere Planungs-Zuordnungssignalisierungen eines zweiten Typs in den Zellen eines ersten Typs zu empfangen, die die Übertragung der Planungs-Zuordnungssignalisierung unterstützen, wobei die Planungs-Zuordnungssignalisierung des ersten Typs verwendet wird zur Anzeige, dass ein gleicher Datentransportblock über eine Mehrzahl von Übertragungszeitintervallen empfangen wird, die in der vorgegebenen Zeit enthalten sind, und die Planungs-Zuordnungssignalisierung des zweiten Typs, die über ein vorgegebenes Übertragungszeitintervall innerhalb der vorgegebenen Zeit empfangen wird, verwendet wird zur Anzeige, dass der Datentransportblock über das vorgegebene Übertragungszeitintervall empfangen wird; und
ein drittes Empfangsmodul (106), das angeordnet ist, um den Datentransportblock in den Zellen des zweiten Typs gemäß der Planungs-Zuordnungssignalisierung des ersten Typs zu empfangen und den Datentransportblock in den Zellen des ersten Typs und/oder den Zellen des zweiten Typs gemäß der Planungs-Zuordnungssignalisierung des zweiten Typs zu empfangen.

13. Vorrichtung nach Anspruch 12, weiter umfassend:
ein viertes Empfangsmodul (112), das angeordnet ist, um in den Zellen des ersten Typs eine Feedback-Ressource zu empfangen, die von einer den Datentransportblock übertragenden Übertragungsseite zugeordnet ist, wobei die Feedback-Ressource verwendet wird zum Rückführen eines Erfassungsergebnisses, das durch Erfassen des Datentransportblocks erhalten wird.

14. Vorrichtung nach Anspruch 13, weiter umfassend:
ein drittes Übertragungsmodul (122), das angeordnet ist, um an die den Datentransportblock übertragende Übertragungsseite das Erfassungsergebnis zu übertragen, das durch Erfassen des Datentransportblocks gemäß der Planungs-Zuordnungssignalisierung des ersten Typs und/oder der Planungs-Zuordnungssignalisierung des zweiten Typs durch Verwendung der Feedback-Ressource erhalten wird.

15. Vorrichtung nach Anspruch 14, wobei das dritte Übertragungsmodul (122) wenigstens eines der Folgenden umfasst:
eine siebte Übertragungseinheit (131), die angeordnet ist, um in dem Fall, dass nur die Planungs-Zuordnungssignalisierung des ersten Typs über ein Übertragungszeitintervall erfolgreich erfasst wird und die Erfassung für den Datentransportblock über das Übertragungszeitintervall korrekt ist, die Information über das korrekte Erfassen an die Übertragungsseite rückzuführen, die den Datentransportblock gemäß der Feedback-Ressource überträgt;
eine achte Übertragungseinheit (132), die angeordnet ist, um in dem Fall, dass nur die Planungs-Zuordnungssignalisierung des ersten Typs über ein Übertragungszeitintervall erfolgreich erfasst wird, die Erfassung für den Datentransportblock über das Übertragungszeitintervall fehlerhaft ist und das Übertragungszeitintervall ein letztes Übertragungszeitintervall innerhalb der vorgegebenen Zeit ist, die Information über den Erfassungsfehler an die Übertragungsseite für den Datentransportblock gemäß der Feedback-Ressource zu übertragen;
eine neunte Übertragungseinheit (133), die angeordnet ist, um in dem Fall, dass die Planungs-Zuordnungssignalisierung des ersten Typs und die die Planungs-Zuordnungssignalisierung des zweiten Typs über ein Übertragungszeitintervall erfolgreich erfasst werden und die Erfassung für den Datentransportblock über das Übertragungszeitintervall korrekt ist, die Information über das korrekte Erfassen an die Übertragungsseite rückzuführen, die den Datentransportblock gemäß der Feedback-Ressource überträgt;
eine zehnte Übertragungseinheit (134), die angeordnet ist, um in dem Fall, dass die Planungs-Zuordnungssignalisierung des ersten Typs und die Planungs-Zuordnungssignalisierung des zweiten Typs über ein Übertragungszeitintervall erfolgreich erfasst werden, die Erfassung für den Datentransportblock über das Übertragungszeitintervall fehlerhaft ist und das Übertragungszeitintervall ein letztes Übertragungszeitintervall innerhalb der vorgegebenen Zeit ist, die Information über den Erfassungsfehler an die Übertragungsseite für den Datentransportblock gemäß der Feedback-Ressource zu übertragen;
eine elfte Übertragungseinheit (135), die angeordnet ist, um in dem Fall, dass nur die Planungs-Zuordnungssignalisierung des zweiten Typs über ein Übertragungszeitintervall erfolgreich erfasst wird, aber die Planungs-Zuordnungssignalisierung des ersten Typs, die anzeigt, dass der Datentransportblock vor dem Übertragungszeitintervall erfasst wurde und die Erfassung des Datentransportblocks über das Übertragungszeitintervall korrekt ist, die Information über das korrekte Erfassen an die Übertragungsseite rückzuführen, die den Datentransportblock gemäß der Feedback-Ressource überträgt;
eine zwölfte Übertragungseinheit (136), die angeordnet ist, um in dem Fall, dass nur die Planungs-Zuordnungssignalisierung des zweiten Typs über ein Übertragungszeitintervall erfolgreich erfasst wird, aber die Planungs-Zuordnungssignalisierung des ersten Typs, die anzeigt, dass der Datentransportblock vor dem Übertragungszeitintervall erfasst wurde, die Erfassung des Datentransportblocks über das Übertragungszeitintervall fehlerhaft ist und das Übertragungszeitintervall ein letztes Übertragungszeitintervall innerhalb der vorgegebenen Zeit ist, die Information über den Erfassungsfehler an die Übertragungsseite rückzuführen, die den Datentransportblock gemäß der Feedback-Ressource überträgt;
eine dreizehnte Übertragungseinheit (137), die angeordnet ist, um in dem Fall, dass nur die Planungs-Zuordnungssignalisierung des zweiten Typs über ein Übertragungszeitintervall erfolgreich erfasst wird und die Erfassung des Datentransportblocks über das Übertragungszeitintervall korrekt ist, die Information über das korrekte Erfassen an die Übertragungsseite rückzuführen, die den Datentransportblock gemäß der Feedback-Ressource überträgt; und
eine vierzehnte Übertragungseinheit (138), die angeordnet ist, um in dem Fall, dass nur die Planungs-Zuordnungssignalisierung des zweiten Typs über ein Übertragungszeitintervall erfolgreich erfasst wird und die Erfassung für den Datentransportblock über das Übertragungszeitintervall fehlerhaft ist, die Information über den Erfassungsfehler an die Übertragungsseite für den Datentransportblock gemäß der Feedback-Ressource zu übertragen.

## Revendications

1. Procédé de transmission d'un bloc de transport de données, **caractérisé en ce qu'**il comprend :
la détermination de cellules d'un premier type supportant la transmission de signalisation d'allocation de planification et de cellules d'un deuxième type supportant seulement la transmission de données (S102) ;
la transmission d'une signalisation d'allocation de planification d'un premier type et une ou plusieurs signalisations d'allocation de planification d'un deuxième type dans les cellules du premier type, dans lequel la signalisation d'allocation de planification du premier type est utilisée pour indiquer qu'un même bloc de transport de données est transmis sur une pluralité d'intervalles de temps de transmission compris dans un temps prédéterminé, et la signalisation d'allocation de planification du deuxième type transmise sur un intervalle de temps de transmission prédéterminé dans le temps prédéterminé est utilisée pour indiquer que le bloc de transport de données est transmis sur l'intervalle de temps de transmission prédéterminé (S104) ; et
la transmission du bloc de transport de données dans les cellules du deuxième type en fonction de la signalisation d'allocation de planification du premier type, et la transmission du bloc de transport de données dans les cellules du premier type et/ou les cellules du deuxième type en fonction de la signalisation d'allocation de planification du deuxième type (S106).

2. Procédé selon la revendication 1, dans lequel, avant la transmission de la signalisation d'allocation de planification du premier type et d'une ou plusieurs signalisations d'allocation de planification du deuxième type dans les cellules du premier type, le procédé comprend en outre :
le réglage du nombre des signalisations d'allocation de planification du deuxième type transmises dans les cellules du premier type en fonction d'une condition de compétition de ressources des cellules du deuxième type ;
ou
dans lequel la signalisation d'allocation de planification du premier type est transmise dans les cellules du premier type par au moins une parmi :
la transmission d'une première signalisation d'allocation de planification sur un premier intervalle de temps de transmission de la pluralité d'intervalles de temps de transmission compris dans le temps prédéterminé ; et
la transmission de la première signalisation d'allocation de planification sur un nombre prédéterminé K d'intervalles de temps de transmission avant le temps prédéterminé ;
ou
dans lequel, avant la transmission du bloc de transport de données dans les cellules du deuxième type en fonction de la signalisation d'allocation de planification du premier type, et la transmission du bloc de transport de données dans les cellules du premier type et/ou les cellules du deuxième type en fonction de la signalisation d'allocation de planification du deuxième type, le procédé comprend en outre :
l'allocation, dans les cellules du premier type, d'une ressource de rétroaction à une extrémité réceptrice cible qui reçoit le bloc de transport de données, dans lequel la ressource de rétroaction est utilisée pour réinjecter un résultat de détection du bloc de transport de données.

3. Procédé selon la revendication 1, dans lequel la transmission du bloc de transport de données dans les cellules du deuxième type en fonction de la signalisation d'allocation de planification du premier type, et la transmission du bloc de transport de données dans les cellules du premier type et/ou les cellules du deuxième type en fonction de la signalisation d'allocation de planification du deuxième type comprend :
le fait de juger si un même intervalle de temps de transmission prédéterminé sur lequel la signalisation d'allocation de planification du deuxième type est transmise et le bloc de transport de données est transmis en fonction de la signalisation d'allocation de planification du deuxième type appartient à un ensemble composé de la pluralité d'intervalles de temps de transmission indiquée par la signalisation d'allocation de planification du premier type ;
dans un cas où un résultat de jugement est oui, la transmission du bloc de transport de données sur l'intervalle de temps de transmission prédéterminé en fonction de la signalisation d'allocation de planification du deuxième type et la transmission du bloc de transport de données sur d'autres intervalles de temps de transmission, autre que le temps de transmission prédéterminé, dans l'ensemble composé de la pluralité d'intervalles de temps de transmission en fonction de la signalisation d'allocation de planification du premier type ; et/ou
dans un cas où le résultat de jugement est non, la transmission du bloc de transport de données sur l'intervalle de temps de transmission prédéterminé en fonction de la signalisation d'allocation de planification du deuxième type et la transmission du bloc de transport de données sur la pluralité d'intervalles de temps de transmission en fonction de la signalisation d'allocation de planification du premier type ;
ou
dans lequel la transmission du bloc de transport de données dans les cellules du premier type et/ou les cellules du deuxième type en fonction de la signalisation d'allocation de planification du deuxième type comprend :
le fait de juger si la signalisation d'allocation de planification du deuxième type transporte des informations d'indice de cellule pour indiquer une cellule dans laquelle le bloc de transport de données est transmis ;
dans un cas où un résultat de jugement est oui et les informations d'indice de cellule indiquent les cellules du premier type, la transmission du bloc de transport de données dans les cellules du premier type ; et/ou
dans un cas où le résultat de jugement est oui et les informations d'indice de cellule indiquent les cellules du deuxième type, ou le résultat de jugement est non, la transmission du bloc de transport de données dans les cellules du deuxième type ;
ou
dans lequel après la transmission du bloc de transport de données dans les cellules du deuxième type en fonction de la signalisation d'allocation de planification du premier type, et la transmission du bloc de transport de données dans les cellules du premier type et/ou les cellules du deuxième type en fonction de la signalisation d'allocation de planification du deuxième type, le procédé comprend en outre :
la réception d'un résultat de détection pour la détection du bloc de transport de données transmis par une extrémité réceptrice cible qui reçoit le bloc de transport de données.

4. Procédé selon l'une quelconque des revendications 1 à 3, dans lequel une différence de temps entre deux quelconques intervalles de temps de transmission adjacents dans la pluralité d'intervalles de temps de transmission compris dans le temps prédéterminé n'est pas inférieure à un temps aller-retour, RTT, entre une extrémité émettrice et un extrémité réceptrice cible du bloc de transport de données.

5. Procédé de réception d'un bloc de transport de données, **caractérisé en ce qu'**il comprend :
la détermination du temps prédéterminé auquel un bloc de transport de données est reçu (S202) ;
la réception d'une signalisation d'allocation de planification d'un premier type et d'une ou plusieurs signalisations d'allocation de planification d'un deuxième type dans des cellules d'un premier type supportant la transmission d'une signalisation d'allocation de planification, dans lequel la signalisation d'allocation de planification du premier type est utilisée pour indiquer qu'un même bloc de transport de données est reçu sur une pluralité d'intervalles de temps de transmission compris dans le temps prédéterminé, et la signalisation d'allocation de planification du deuxième type reçue sur un intervalle de temps de transmission prédéterminé dans le temps prédéterminé est utilisée pour indiquer que le bloc de transport de données est reçu sur l'intervalle de temps de transmission prédéterminé (S204) ; et
la réception du bloc de transport de données dans des cellules d'un deuxième type en fonction de la signalisation d'allocation de planification du premier type, et la réception du bloc de transport de données dans les cellules du premier type et/ou les cellules du deuxième type en fonction de la signalisation d'allocation de planification du deuxième type (S206).

6. Procédé selon la revendication 5, dans lequel, avant la réception du bloc de transport de données dans les cellules du deuxième type en fonction de la signalisation d'allocation de planification du premier type et la réception du bloc de transport de données dans les cellules du premier type et/ou les cellules du deuxième type en fonction de la signalisation d'allocation de planification du deuxième type, le procédé comprend en outre :
la réception, dans les cellules du premier type, d'une ressource de rétroaction qui est allouée par une extrémité émettrice qui transmet le bloc de transport de données, dans lequel la ressource de rétroaction est réglée pour la rétroaction d'un résultat de détection obtenu en détectant le bloc de transport de données,

7. Procédé selon la revendication 6, dans lequel, après la réception du bloc de transport de données dans les cellules du deuxième type en fonction de la signalisation d'allocation de planification du premier type et la réception du bloc de transport de données dans les cellules du premier type et/ou les cellules du deuxième type en fonction de la signalisation d'allocation de planification du deuxième type, le procédé comprend en outre :
la transmission, à l'extrémité émettrice qui transmet le bloc de transport de données, du résultat de détection obtenu en détectant le bloc de transport de données en fonction de la signalisation d'allocation de planification du premier type et/ou la signalisation d'allocation de planification du deuxième type en utilisant la ressource de rétroaction.

8. Procédé selon la revendication 7, dans lequel la transmission, à l'extrémité émettrice qui transmet le bloc de transport de données, du résultat de détection obtenu en détectant le bloc de transport de données en fonction de la signalisation d'allocation de planification du premier type et/ou la signalisation d'allocation de planification du deuxième type en utilisant la ressource de rétroaction comprend au moins un parmi :
dans un cas où seule la signalisation d'allocation de planification du premier type est détectée avec succès sur un intervalle de temps de transmission, et la détection du bloc de transport de données sur l'intervalle de temps de transmission est correcte, la rétroaction d'informations d'exactitude de détection sur l'extrémité émettrice qui transmet le bloc de transport de données en fonction de la ressource de rétroaction ;
dans un cas où seule la signalisation d'allocation de planification du premier type est détectée avec succès sur un intervalle de temps de transmission, la détection du bloc de transport de données sur l'intervalle de temps de transmission est erronée, et l'intervalle de temps de transmission est un dernier intervalle de temps de transmission dans le temps prédéterminé, la transmission d'informations d'erreurs de détection à l'extrémité émettrice pour le bloc de transport de données en fonction de la ressource de rétroaction ;
dans un cas où la signalisation d'allocation de planification du premier type et la signalisation d'allocation de planification du deuxième type sont détectées avec succès sur un intervalle de temps de transmission, et la détection du bloc de transport de données sur l'intervalle de temps de transmission est correcte, la rétroaction d'informations d'exactitude de détection sur l'extrémité émettrice qui transmet le bloc de transport de données en fonction de la ressource de rétroaction ;
dans un cas où la signalisation d'allocation de planification du premier type et la signalisation d'allocation de planification du deuxième type sont détectées avec succès sur un intervalle de temps de transmission, la détection du bloc de transport de données sur l'intervalle de temps de transmission est erronée, et l'intervalle de temps de transmission est un dernier intervalle de temps de transmission dans le temps prédéterminé, la transmission d'informations d'erreurs de détection à l'extrémité émettrice pour le bloc de transport de données en fonction de la ressource de rétroaction ;
dans un cas où seule la signalisation d'allocation de planification du deuxième type est détectée avec succès sur un intervalle de temps de transmission, mais la signalisation d'allocation de planification du premier type indiquant le bloc de transport de données a été détectée avant l'intervalle de temps de transmission, et la détection du bloc de transport de données sur l'intervalle de temps de transmission est correcte, la rétroaction d'informations d'exactitude de détection sur l'extrémité émettrice qui transmet le bloc de transport de données en fonction de la ressource de rétroaction ;
dans un cas où seule la signalisation d'allocation de planification du deuxième type est détectée avec succès sur un intervalle de temps de transmission, mais la signalisation d'allocation de planification du premier type indiquant le bloc de transport de données a été détectée avant l'intervalle de temps de transmission, la détection du bloc de transport de données sur l'intervalle de temps de transmission est erronée et l'intervalle de temps de transmission est un dernier intervalle de temps de transmission dans le temps prédéterminé, la réinjection d'informations d'erreurs de détection à l'extrémité émettrice qui transmet le bloc de transport de données en fonction de la ressource de rétroaction ;
dans un cas où seule la signalisation d'allocation de planification du deuxième type est détectée avec succès sur un intervalle de temps de transmission, et la détection du bloc de transport de données sur l'intervalle de temps de transmission est correcte, la rétroaction d'informations d'exactitude de détection sur l'extrémité émettrice qui transmet le bloc de transport de données en fonction de la ressource de rétroaction ; et
dans un cas où seule la signalisation d'allocation de planification du deuxième type est détectée avec succès sur un intervalle de temps de transmission, et la détection du bloc de transport de données sur l'intervalle de temps de transmission est erronée, la transmission d'informations d'erreurs de détection à l'extrémité émettrice pour le bloc de transport de données en fonction de la ressource de rétroaction.

9. Dispositif de transmission d'un bloc de transport de données, **caractérisé en ce qu'**il comprend :
un premier module de détermination (32) agencé pour déterminer des cellules d'un premier type supportant la transmission d'une signalisation d'allocation de planification et des cellules d'un deuxième type supportant seulement la transmission de données ;
un premier module de transmission (34) agencé pour transmettre une signalisation d'allocation de planification d'un premier type et une ou plusieurs signalisations d'allocation de planification d'un deuxième type dans les cellules du premier type, dans lequel la signalisation d'allocation de planification du premier type est utilisée pour indiquer qu'un même bloc de transport de données est transmis sur une pluralité d'intervalles de temps de transmission compris dans un temps prédéterminé, et la signalisation d'allocation de planification du deuxième type transmise sur un intervalle de temps de transmission prédéterminé dans le temps prédéterminé est utilisée pour indiquer que le bloc de transport de données est transmis sur l'intervalle de temps de transmission prédéterminé ; et
un deuxième module de transmission (36) agencé pour transmettre le bloc de transport de données dans les cellules du deuxième type en fonction de la signalisation d'allocation de planification du premier type, et transmettre le bloc de transport de données dans les cellules du premier type et/ou les cellules du deuxième type en fonction de la signalisation d'allocation de planification du deuxième type.

10. Dispositif selon la revendication 9, comprenant en outre :
un module de réglage (42) agencé pour régler le nombre des signalisations d'allocation de planification du deuxième type transmises dans les cellules du premier type en fonction d'une condition de compétition de ressources des cellules du deuxième type ;
ou
dans lequel le premier module de transmission (34) comprend au moins un parmi :
une première unité de transmission (52) agencée pour transmettre une première signalisation d'allocation de planification sur un premier intervalle de temps de transmission de la pluralité d'intervalles de temps de transmission compris dans le temps prédéterminé ; et
une deuxième unité de transmission (54) agencée pour transmettre la première signalisation d'allocation de planification sur un nombre prédéterminé K d'intervalles de temps de transmission avant le temps prédéterminé ;
ou
comprenant en outre :
un module d'allocation (62) agencé pour allouer, dans les cellules du premier type, une ressource de rétroaction à une extrémité réceptrice cible qui reçoit le bloc de transport de données, dans lequel la ressource de rétroaction est utilisée pour réinjecter un résultat de détection du bloc de transport de données.

11. Dispositif selon la revendication 9, dans lequel le deuxième module de transmission (36) comprend :
une première unité de jugement (72) agencée pour juger si un même intervalle de temps de transmission prédéterminé sur lequel la signalisation d'allocation de planification du deuxième type est transmise et le bloc de transport de données est transmis en fonction de la signalisation d'allocation de planification du deuxième type appartient à un ensemble composé de la pluralité d'intervalles de temps de transmission indiquée par la signalisation d'allocation de planification du premier type ;
une troisième unité de transmission (74), agencée pour, dans un cas où un résultat de jugement de la première unité de jugement est oui, transmettre le bloc de transport de données sur l'intervalle de temps de transmission prédéterminé en fonction de la signalisation d'allocation de planification du deuxième type et transmettre le bloc de transport de données sur d'autres intervalles de temps de transmission, autre que le temps de transmission prédéterminé, dans l'ensemble composé de la pluralité d'intervalles de temps de transmission en fonction de la signalisation d'allocation de planification du premier type ; et/ou
une quatrième unité de transmission (76) agencée pour, dans un cas où le résultat de jugement de la première unité de jugement est non, transmettre le bloc de transport de données sur l'intervalle de temps de transmission prédéterminé en fonction de la signalisation d'allocation de planification du deuxième type et transmettre le bloc de transport de données sur la pluralité d'intervalles de temps de transmission en fonction de la signalisation d'allocation de planification du premier type ;
ou
dans lequel le deuxième module de transmission (36) comprend :
une deuxième unité de jugement (82) agencée pour juger si la signalisation d'allocation de planification du deuxième type transporte des informations d'indice de cellule pour indiquer une cellule dans laquelle le bloc de transport de données est transmis ;
une cinquième unité de transmission (84) agencée pour, dans un cas où un résultat de jugement de la deuxième unité de jugement est oui et les informations d'indice de cellule indiquent les cellules du premier type, transmettre le bloc de transport de données dans les cellules du premier type ; et/ou
une sixième unité de transmission (86) agencée pour, dans le cas où le résultat de jugement de la deuxième unité de jugement est oui et les informations d'indice de cellule indiquent les cellules du deuxième type, ou le résultat de jugement de la deuxième unité de jugement est non, transmettre le bloc de transport de données dans les cellules du deuxième type ;
ou
comprenant en outre :
un premier module de réception (92) agencé pour recevoir un résultat de détection pour la détection du bloc de transport de données transmis par une extrémité réceptrice cible qui reçoit le bloc de transport de données.

12. Dispositif de réception d'un bloc de transport de données, **caractérisé en ce qu'**il comprend :
un deuxième module de détermination (102) agencé pour déterminer un temps prédéterminé auquel un bloc de transport de données est reçu ;
un deuxième module de réception (104) agencé pour recevoir une signalisation d'allocation de planification d'un premier type et une ou plusieurs signalisations d'allocation de planification d'un deuxième type dans des cellules d'un premier type supportant la transmission d'une signalisation d'allocation de planification, dans lequel la signalisation d'allocation de planification du premier type est utilisée pour indiquer qu'un même bloc de transport de données est reçu sur une pluralité d'intervalles de temps de transmission compris dans un temps prédéterminé, et la signalisation d'allocation de planification du deuxième type reçue sur un intervalle de temps de transmission prédéterminé dans le temps prédéterminé est utilisée pour indiquer que le bloc de transport de données est reçu sur l'intervalle de temps de transmission prédéterminé ; et
un troisième module de réception (106) agencé pour recevoir le bloc de transport de données dans des cellules d'un deuxième type en fonction de la signalisation d'allocation de planification du premier type, et recevoir le bloc de transport de données dans les cellules du premier type et/ou les cellules du deuxième type en fonction de la signalisation d'allocation de planification du deuxième type.

13. Dispositif selon la revendication 12, comprenant en outre :
un quatrième module de réception (112) agencé pour recevoir, dans les cellules du premier type, une ressource de rétroaction qui est allouée par une extrémité émettrice qui transmet le bloc de transport de données, dans lequel la ressource de rétroaction est utilisée pour réinjecter un résultat de détection obtenu en détectant le bloc de transport de données.

14. Dispositif selon la revendication 13, comprenant en outre :
un troisième module de transmission (122) agencé pour transmettre, à l'extrémité émettrice qui transmet le bloc de transport de données, le résultat de détection obtenu en détectant le bloc de transport de données en fonction de la signalisation d'allocation de planification du premier type et/ou la signalisation d'allocation de planification du deuxième type en utilisant la ressource de rétroaction.

15. Dispositif selon la revendication 14, dans lequel, le troisième module de transmission (122) comprend au moins un parmi :
une septième unité de transmission (131) agencée pour, dans un cas où seule la signalisation d'allocation de planification du premier type est détectée avec succès sur un intervalle de temps de transmission, et la détection du bloc de transport de données sur l'intervalle de temps de transmission est correcte, réinjecter des informations d'exactitude de détection sur l'extrémité émettrice qui transmet le bloc de transport de données en fonction de la ressource de rétroaction ;
une huitième unité de transmission (132) agencée pour, dans un cas où seule la signalisation d'allocation de planification du premier type est détectée avec succès sur un intervalle de temps de transmission, la détection du bloc de transport de données sur l'intervalle de temps de transmission est erronée, et l'intervalle de temps de transmission est un dernier intervalle de temps de transmission dans le temps prédéterminé, transmettre des informations de détection d'erreur à l'extrémité émettrice pour le bloc de transport de données en fonction de la ressource de rétroaction ;
une neuvième unité de transmission (133) agencée pour, dans un cas où la signalisation d'allocation de planification du premier type et la signalisation d'allocation de planification du deuxième type sont détectées avec succès sur un intervalle de temps de transmission, et la détection du bloc de transport de données sur l'intervalle de temps de transmission est correcte, réinjecter des informations d'exactitude de détection sur l'extrémité émettrice qui transmet le bloc de transport de données en fonction de la ressource de rétroaction ;
une dixième unité de transmission (134) agencée pour, dans un cas où la signalisation d'allocation de planification du premier type et la signalisation d'allocation de planification du deuxième type sont détectées avec succès sur un intervalle de temps de transmission, la détection du bloc de transport de données sur l'intervalle de temps de transmission est erronée, et l'intervalle de temps de transmission est un dernier intervalle de temps de transmission dans le temps prédéterminé, transmettre des informations d'erreurs de détection à l'extrémité émettrice pour le bloc de transport de données en fonction de la ressource de rétroaction ;
une onzième unité de transmission (135) agencée pour dans un cas où seule la signalisation d'allocation de planification du deuxième type est détectée avec succès sur un intervalle de temps de transmission, mais la signalisation d'allocation de planification du premier type indiquant le bloc de transport de données a été détectée avant l'intervalle de temps de transmission, et la détection du bloc de transport de données sur l'intervalle de temps de transmission est correcte, réinjecter des informations d'exactitude de détection sur l'extrémité émettrice qui transmet le bloc de transport de données en fonction de la ressource de rétroaction ;
une douzième unité de transmission (136) agencée pour dans un cas où seule la signalisation d'allocation de planification du deuxième type est détectée avec succès sur un intervalle de temps de transmission, mais la signalisation d'allocation de planification du premier type indiquant le bloc de transport de données a été détectée avant l'intervalle de temps de transmission, la détection du bloc de transport de données sur l'intervalle de temps de transmission est erronée et l'intervalle de temps de transmission est un dernier intervalle de temps de transmission dans le temps prédéterminé, réinjecter des informations d'exactitude de détection sur l'extrémité émettrice qui transmet le bloc de transport de données en fonction de la ressource de rétroaction ;
une treizième unité de transmission (137) agencée pour dans un cas où seule la signalisation d'allocation de planification du deuxième type est détectée avec succès sur un intervalle de temps de transmission, et la détection du bloc de transport de données sur l'intervalle de temps de transmission est correcte, réinjecter des informations d'exactitude de détection sur l'extrémité émettrice qui transmet le bloc de transport de données en fonction de la ressource de rétroaction ; et
une quatorzième unité de transmission (138) agencée pour dans un cas où seule la signalisation d'allocation de planification du deuxième type est détectée avec succès sur un intervalle de temps de transmission, et la détection du bloc de transport de données sur l'intervalle de temps de transmission est erronée, transmettre des informations d'erreurs de détection à l'extrémité émettrice pour le bloc de transport de données en fonction de la ressource de rétroaction.
